# EUROPEAN PATENT APPLICATION

(11) **EP 2 743 818 A2**
(43) Date of publication of application: **18.06.2014**
(21) Application number: 13193340.0
(22) Date of filing: 18.11.2013
(51) Int. Cl.: G06F 3/0488

(54) **Mobile terminal and method of controlling the mobile terminal**

(30) Priority: 12.12.2012 KR 20120144625; 12.12.2012 KR 20120144629
(71) Applicant: LG Electronics Inc., Seoul (KR)
(72) Inventor: Jung, Jimyong, Seoul (KR); Kim, Bumbae, Seoul (KR); Lee, Seulah, Seoul (KR); Rhee, Jeongyoon, Seoul (KR); Han, Miran, Seoul (KR); Lee, Jungbin, Seoul (KR); Lim, Dohyun, Seoul (KR)
(74) Representative: Cabinet Plasseraud

(57) **Abstract**

A mobile terminal including a touch screen display unit configured to display a home screen page among a plurality of home screen pages; and a controller configured to receive a touch input on the displayed home screen page, limit or prevent a layout of the content on the displayed home screen page from being changed based on the received touch input and instead execute a function related to the received touch input, when the displayed home screen page includes a first attribute indicating the layout of content on the home screen page is limited or prevented from being changed, and change the layout of the content on the displayed home screen page based on the received touch input, when the displayed home screen page includes a second attribute indicating the layout of the content on the home screen page can be changed.

## Description

### BACKGROUND OF THE INVENTION

### Field of the Invention

The present invention relates to a mobile terminal that outputs a web page and a method of controlling the mobile terminal.

### Background of the Invention

A terminal is broadly categorized into a mobile terminal and a stationary terminal. The mobile terminal is further categorized into a handheld terminal and a vehicle-mounted terminal.

In response to an increasing demand for diversified functions, the terminal has been realized in the form of a multimedia player with multiple functions such as shooting a photographic object as a still image or moving images, reproducing digital audio and video compression files, playing a game, receiving a broadcast or the like.

One of a plurality of home screen pages is output to a touch screen of the mobile terminal based on a user's touch gesture. An icon or a widget associated with an application may also be output to the home screen page. The output icon or widget may be moved by a touch gesture, or an icon or widget different from the current icon or widget may be output. However, the home screen user interface is limited, which makes it more difficult to operate the mobile terminal.

### SUMMARY OF THE INVENTION

Accordingly, one aspect of the present invention is to address the above-noted and other drawbacks of the related art mobile terminal.

Another aspect of the present invention is to provide a mobile terminal that more conveniently provides a user with information from a home screen page.

To achieve these and other advantages and in accordance with the purpose of this specification, as embodied and broadly described herein, there is provided a mobile terminal including a display unit that displays one of multiple home screen pages, a user input unit that receives an input of a user control command for changing a layout of screen information output to the home screen page, and a controller that limits a change in the layout of the screen information, depending on an attribute of the screen information t output to the display unit.

In the mobile terminal, the attribute may include a first attribute that enables inclusion of at least one item of content, the layout of which is changed based on the user control command, and a second attribute that enables inclusion of the content that is arranged according to the fixed layout, and the screen information in the multiple home screen pages may include any one of the first attribute and the second attribute.

In the mobile terminal, the screen information to be arranged on the home screen page is set based on the control command that is input through the user input unit, in when the screen information having the second attribute is output to the display unit.

In the mobile terminal, the home screen information in the home screen page, which has the second attribute, may be a web browser screen including predetermined uniform resource locator (URL) information.

In the mobile terminal, the controller may output an input window for inputting the uniform resource locator (URL) information to at least one part of the home screen page, and may arrange the web browser screen corresponding to the URL information that is input to the input window, on the home screen page, based on the control command that is input through the user input unit when the home screen page is output to the display unit.

In the mobile terminal, the controller may control the display unit so an input window for inputting the URL information is output to at least one part of the home screen page, and the web browser screen corresponding to the URL information that is input to the input window, is arranged on the home screen page, based on the control command that is input through the user input unit when the home screen page is output to the display unit.

In the mobile terminal, the control command may correspond to a touch input with respect to a function icon output to the home screen page, or a predetermined-type touch input with respect to the home screen page.

In the mobile terminal, if the multiple items of URL information are input through the input window, the controller may arrange together the web browser screens that correspond to the multiple items of URL information, respectively, on one of the home screen pages, or may arrange the web browser screens that correspond to the multiple items of URL information, respectively, on the multiple home screen pages, respectively.

In the mobile terminal, the controller may detect an occurrence of an update event for updating the screen information in the home screen page, which has the second attribute, and may control the display unit so the home screen page including the second attribute is changed, based on the update event.

In the mobile terminal, the update event may correspond to outputting the home screen page including the second attribute to the display unit based on the user touch input.

In the mobile terminal, the screen information in the home screen page, which has the second attribute, may further include an execution icon for content that is reproduced based on the user touch input, and if the user touch input is applied to the execution icon, the controller may execute a predetermined application in order to reproduce the content, or may change the screen information.

In the mobile terminal, the screen information in the home screen page, which has the second attribute, may further include an execution icon for content that is reproduced based on the user touch input, the controller may further include a memory that stores the screen information in the home screen page, which has the second attribute, in the different home screen page, if the user touch input is applied to the execution icon, and the controller may control the display unit so the different home screen page, on which the content is reproduced, including the different screen information is output.

In the mobile terminal, the controller may control the memory so a first home screen page having the first attribute, a second home screen page having the second attribute and a third home screen page having the second attribute, which is generated based on the user touch input applied to the execution icon are stored, and may control the display unit so if the third home screen page is output to the display unit, switching to the first home screen page is triggered based on a first gesture applied to the display unit, and switching to the second home screen page is triggered based on a second gesture different from the first gesture.

In the mobile terminal, if the touch input is input with respect to the screen information having the second attribute, arranged on the home screen page, the controller may switch the home screen page to the different home screen page from the home screen page according to a touch input mode with respect to the arranged screen information including the second attribute, or may change at least one part of information included in the web page.

In the mobile terminal, the touch input mode with respect to the screen information having the second attribute may include a locked mode and a unlocked mode, and if the touch input mode with respect to the screen information having the second attribute is the locked mode, inputting of the control command to the web page may be limited, and if the touch input mode with respect to the screen information having the second attribute is the unlocked mode, at least one part of the information included in the web page may be changed according to applying of the touch input with respect to the web page.

In the mobile terminal, the controller may output an alarm message that is displayed depending on a user selection, to at least one region of the display unit, and an alarm item including information corresponding to the screen information having the second attribute, which is arranged on the home screen page, may be displayed on the alarm message window.

In the mobile terminal, the controller may control the display unit so the home screen page on which the screen information having the second attribute is arranged is output, in response to selecting of the alarm item.

To achieve these and other advantages and in accordance with the purpose of this specification, as embodied and broadly described herein, there is provided a method of controlling a mobile terminal including displaying one of multiple home screen pages on a display unit, applying a control command for changing a layout of screen information output to the display unit, to the display unit, determining an attribute of the home screen page, and changing the layout or limiting a change in the layout according to the attribute of the home screen page.

The method of controlling a mobile terminal may further include detecting an update event for the home screen page having the second attribute, which is output to the display unit and changing the screen information based on the update event.

The method of controlling a mobile terminal may further include setting a web page to be arranged on the home screen page, arranging the web page that is set, on the home screen page, receiving a touch input with respect to the web page arranged on the home screen page when the home screen page is output to the display unit, and changing at least one part of information included in the web page arranged on the home screen page in response to the touch input.

In the mobile terminal according to one embodiment of the present invention and the method of controlling the mobile terminal, the predetermined screen information, of which the layout is unchangeable, is output to the home screen page. As a result, the user can be more speedily provided with the predetermined information from the home screen page.

In addition, since the screen information in the home screen page is changed to the different information by the update event, automatically or based on the user's control command, the user can continue to be provided with the updated information from the home screen page.

In addition, the content included in the screen information is reproduced on the proper application or on the home screen page, and the control command with respect to the content is discriminated from the control command for switching the home screen page, according to the user's setting. As a result, the user can be easily provided with the information.

Furthermore, in the mobile terminal according to one embodiment of the present invention and the method of controlling the mobile terminal, the web page is output to the home screen page, and the information included in the web page is changed based on the user's selection.

Accordingly, even though the user does not execute the web browser separately, he/she can obtain the information through the web page from the home screen page.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating a mobile terminal according to one embodiment of the present invention;
FIGS. 2A and 2B are perspective views, each illustrating a mobile terminal according to one embodiment of the present invention when viewed from the front and rear side, respectively;
FIGS. 3A-3C are diagrams illustrating a method of switching a page output to a display unit, to a different page in the mobile terminal according to one embodiment of the present invention;
FIG. 4 is a flowchart illustrating a method of changing a layout of screen information depending on an attribute of the screen information in the mobile terminal according to one embodiment of the present invention;
FIGS. 5A and 5B are diagrams, each illustrating the method of FIG. 4 according to various embodiments;
FIG. 6 is a flowchart illustrating a method of updating the screen information;
FIGS. 7A-7C are diagrams, each illustrating the method of FIG. 6 according to the various embodiments;
FIGS. 8A and 8B are diagrams, each illustrating a method of controlling the screen information according to the various embodiments;
FIG. 9 is a flowchart illustrating a method of setting a web browser to be arranged on a home screen page in the mobile terminal according to one embodiment of the present invention;
FIGS. 10A-10D are diagrams, each illustrating the method of FIG. 9;
FIGS. 11A-11C are diagrams, each illustrating a method of selecting a web browser screen to be arranged on the home screen page in the mobile terminal according to one embodiment of the present invention.
FIGS. 12A-12C are diagrams, each illustrating a method of applying a control command with respect to a web page to be arranged on the home screen page in the mobile terminal according to one embodiment of the present invention.
FIGS. 13A-13D are diagrams, each illustrating a method of arranging the multiple web pages on the home screen page in the mobile terminal according to one embodiment of the present invention;
FIGS. 14A and 14B are diagrams, each illustrating a method of outputting the web page arranged on the home screen page in the mobile terminal according to one embodiment of the present invention; and
FIGS. 15A and 15B are diagrams, each illustrating an attribute of the web page arranged on the home screen page in the mobile terminal according to one embodiment of the present invention.

### DETAILED DESCRIPTION OF THE INVENTION

Hereinafter, the present invention will be explained in more detail with reference to the attached drawings. For the sake of brief description with reference to the drawings, the same or equivalent components will be provided with the same reference numbers, and description thereof will not be repeated. The suffixes "module" and "unit or portion" for components used in the following description merely provided only for facilitation of preparing this specification, and thus they are not granted a specific meaning or function. embodiments are not limited by any of the details of the foregoing description, but rather should be construed broadly within its spirit and scope and it is intended that the present invention cover modifications and variations of this invention provided they come within the scope of the appended claims and their equivalents.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC and an ultra book. However, the present invention may be also applicable to a fixed terminal such as a digital TV and a desktop computer, except for specific configurations for mobility.

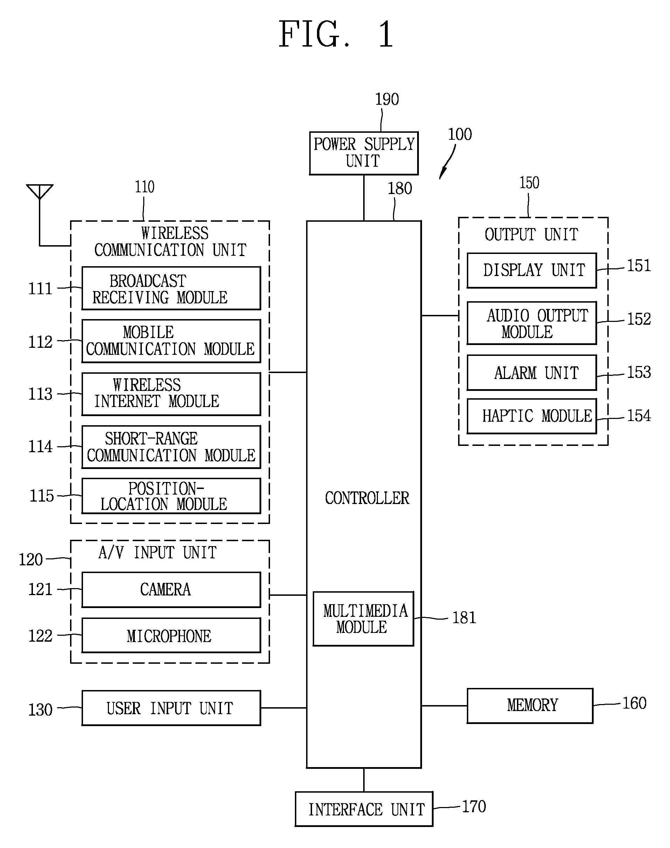

FIG. 1 is a block diagram of a mobile terminal according to an embodiment of the present invention. As shown in FIG. 1, the mobile terminal 100 includes a wireless communication unit 110, an A/V (Audio/Video) input unit 120, a user input unit 130, a sensing unit 140, an output unit 150, a memory 160, an interface unit 170, a controller 180, and a power supply unit 190. FIG. 1 shows the mobile terminal 100 having various components, but implementing all of the illustrated components is not a requirement. The mobile terminal 100 may be implemented by greater or fewer components.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and, in this instance, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO®), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The mobile communication module 112 is configured to implement a video call mode and a voice call mode. The video call mode indicates a call performed while a user views another party, whereas the voice call mode indicates a call performed while a user does not view another party. For implementation of the video call mode and the voice call mode, the mobile communication module 112 is configured to transceive at least one of voice data and image data.

The wireless Internet module 113 supports wireless Internet access for the mobile communication terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include BluetoothTM, Radio Frequency IDentification (RFID), Infrared Data Association (IrDA), Ultra-WideBand (UWB), ZigBeeTM, and the like.

The location information module 115 is a module for acquiring a location (or position) of the mobile communication terminal. For example, the location information module 115 may include a GPS (Global Positioning System) module.

The A/V input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the wireless communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 for the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of a user's touch (contact) with the mobile terminal 100 (e.g., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or a capturing mode, the display unit 151 may display a captured and/or received image or a GUI or a UI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of these displays may be configured to be transparent so that outside may be seen therethrough, which may be referred to as a transparent display. A representative example of this transparent display may include a transparent organic light emitting diode (TOLED), etc. The mobile terminal 100 may include two or more display units 151. For example, the mobile terminal may include both an external display unit and an internal display unit. The touch screen may be configured to detect a touch input pressure as well as a touch input location and a touch input area.

The display unit 151 may be implemented in two or more in number according to a configured aspect of the mobile terminal 100. For instance, a plurality of displays may be arranged on one surface integrally or separately, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

In addition, a proximity sensor may be arranged at an inner region of the mobile terminal covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The proximity sensor may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this instance, the touch screen (touch sensor) may be categorized into a proximity sensor.

In the following description, for the sake of brevity, recognition of the pointer positioned to be close to the touch screen without being contacted will be called a 'proximity touch', while recognition of actual contacting of the pointer on the touch screen will be called a 'contact touch'. In this instance, when the pointer is in the state of the proximity touch, it means that the pointer is positioned to correspond vertically to the touch screen.

The proximity sensor detects a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be output to the touch screen.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed in the mobile terminal 100. The audio output module 152 may include a receiver, a speaker, a buzzer, etc.

The alarm unit 153 outputs a signal for informing about an occurrence of an event of the mobile terminal 100. Events generated in the mobile terminal may include call signal reception, message reception, key signal inputs, and the like. In addition to video or audio signals, the alarm unit 153 may output signals in a different manner, for example, to inform about an occurrence of an event. For example, the alarm unit 153 may output a signal in the form of vibration. Such video signal or audio signal may be output through the display unit 151 or the audio output module 152. Accordingly, the display unit 151 or the audio output module 152 may be categorized into part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be output or sequentially output.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a map data, phonebook, messages, still images, video, etc.) that are input or output. The memory 160 may store therein data on vibrations and sounds of various patterns output when a touch is input onto the touch screen.

The memory 160 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

Here, the identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals input by the user from the cradle to be transferred to the mobile terminal therethrough. Various command signals or power input from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Once a preset condition of the mobile terminal is satisfied, the controller 180 can execute a locked state for limiting a user's input of control commands with respect to applications. In addition, the controller 180 can control a locked screen displayed in the locked state, based on a touch input sensed by the display unit (hereinafter, will be referred to as 'touch screen' 151) in the locked state.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For a hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For a software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

Hereinafter, a structure of the mobile terminal of FIG. 1 according to an embodiment of the present invention will be explained.

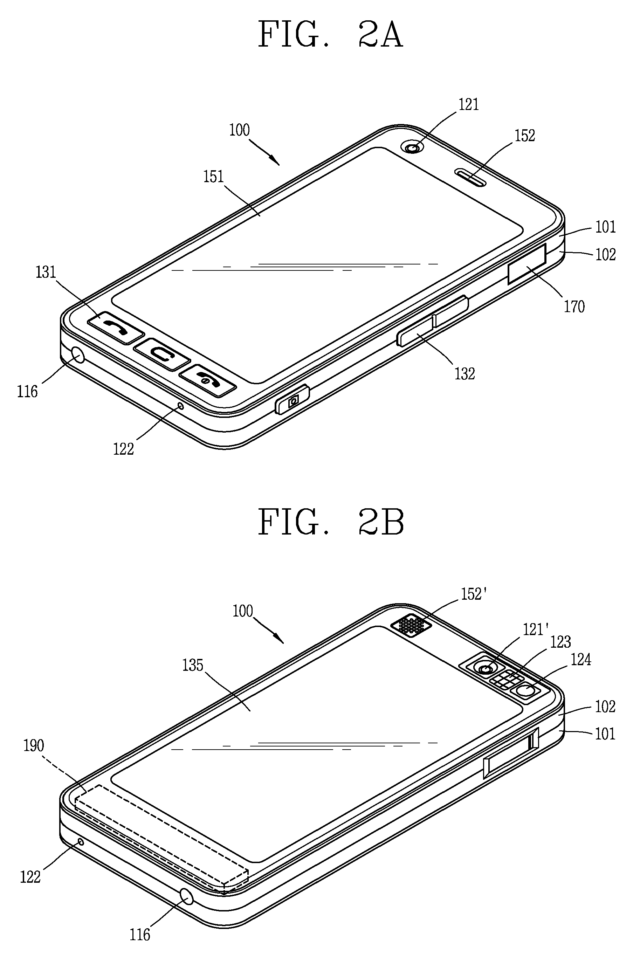

FIG. 2A is a front perspective view of the mobile terminal according to an embodiment of the present invention, and FIG. 2B is a rear perspective view of the mobile terminal according to an embodiment of the present invention

The mobile terminal 100 according to an embodiment of the present invention is a bar type mobile terminal. However, the present invention is not limited to this, but may be applied to a slide type in which two or more bodies are coupled to each other so as to perform a relative motion, a folder type, or a swing type, a swivel type and the like.

A body of the mobile terminal 100 has a front surface, side surfaces and a rear surface. The body has two ends in a lengthwise direction. A case (casing, housing, cover, etc.) forming an outer appearance of the body may include a front case 101 and a rear case 102. A space formed by the front case 101 and the rear case 102 may accommodate various components therein. At least one intermediate case may further be disposed between the front case 101 and the rear case 102.

Such cases may be formed by injection-molded synthetic resin, or may be formed using a metallic material such as stainless steel (STS) or titanium (Ti). At the front case 101, may be disposed a display unit 151, an audio output unit 152, a camera 121, user input units 130/131 and 132, a microphone 122, an interface unit 170, etc.

The display unit 151 occupies most parts of a main surface of the front case 101. The audio output unit 152 and the camera 121 are arranged at a region adjacent to one end of the stereoscopic display unit 151, and the user input unit 131 and the microphone 122 are arranged at a region adjacent to another end of the display unit 152. The user input unit 131, the interface unit 170, etc. may be arranged on side surfaces of the front case 101 and the rear case 102. On the other hand, the microphone 122 is arranged at another end of the body.

The user input unit 130 is manipulated to receive a command for controlling the operation of the mobile terminal 100, and may include a plurality of manipulation units 131 and 132. The manipulation units may be referred to as manipulating portions, and may include any type of ones that can be manipulated in a user's tactile manner.

Commands input through the first or second user input units 131 and 132 may be variously set. For instance, the first manipulation 131 is configured to input commands such as START, END, SCROLL or the like, and the second manipulation unit 132 is configured to input commands for controlling a level of sound output from the audio output unit 152, or commands for converting the current mode of the display unit 151 to a touch recognition mode.

Referring to FIG. 2B, an audio output unit 152' may be additionally disposed at the rear case 102. The audio output unit 152' may implement a stereo function together with the audio output unit 152 (refer to FIG. 2A), and may be used for calling in a speaker phone mode.

A power supply unit 190 for supplying power to the mobile terminal 100 is mounted to the body. The power supply unit 190 may be mounted in the body, or may be detachably mounted to the body.

A touch pad 135 for sensing touch may be additionally mounted to the rear case 102. Like the display unit 151, the touch pad 135 may be formed to be light-transmissive. In this instance, if the display unit 151 is configured to output visual information from two surfaces thereof, the visual information can be recognized through the touch pad 135. The information output from the two surfaces can be controlled by the touch pad 135. Alternatively, a display may be additionally mounted to the touch pad 135, so that a touch screen can be disposed at the rear case 102.

A camera 121' may be additionally provided on the rear case 102. The camera 121' faces a direction which is opposite to a direction faced by the camera 121, and may have different pixels from those of the camera 121. For example, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use. The cameras 121 and 121' may be installed at the body 100 so as to rotate or pop-up.

A flash 123 and a mirror 124 may be additionally disposed close to the camera 121'. The flash 123 operates in conjunction with the camera 121' when taking a picture using the camera 121'. The mirror 124 can cooperate with the camera 121' to allow a user to photograph himself in a self-portrait mode.

An audio output unit 152' may be additionally arranged on a rear surface of the body. The audio output unit 152' may cooperate with the audio output unit 252152 so as to implement a stereo function. Also, the audio output unit may be configured to operate as a speakerphone.

A power supply unit 190 for supplying power to the mobile terminal 100 is mounted to the body. The power supply unit 190 may be mounted in the body, or may be detachably mounted to the body.

The touch pad 135 operates in association with the display unit 151 of the front case 101. The touch pad 135 may be disposed on the rear surface of the display unit 151 in parallel. The touch pad 135 may have a size equal to or smaller than that of the display unit 151. A retractable broadcast antenna 116 may also be including the mobile terminal 100.

In the mobile terminal which can include at least one of the above components according to an embodiment of the present invention, when a home screen page (or page) output to the display unit is converted to another home screen page, the controller 180 may move the already-output home screen page and display a new home screen page to with changing their shape.

Firstly, the aforementioned home screen page, and an object included in the home screen page will be explained. Then, a method for moving the home screen page with changing the shape of the home screen page and the object included in the home screen page will be explained.

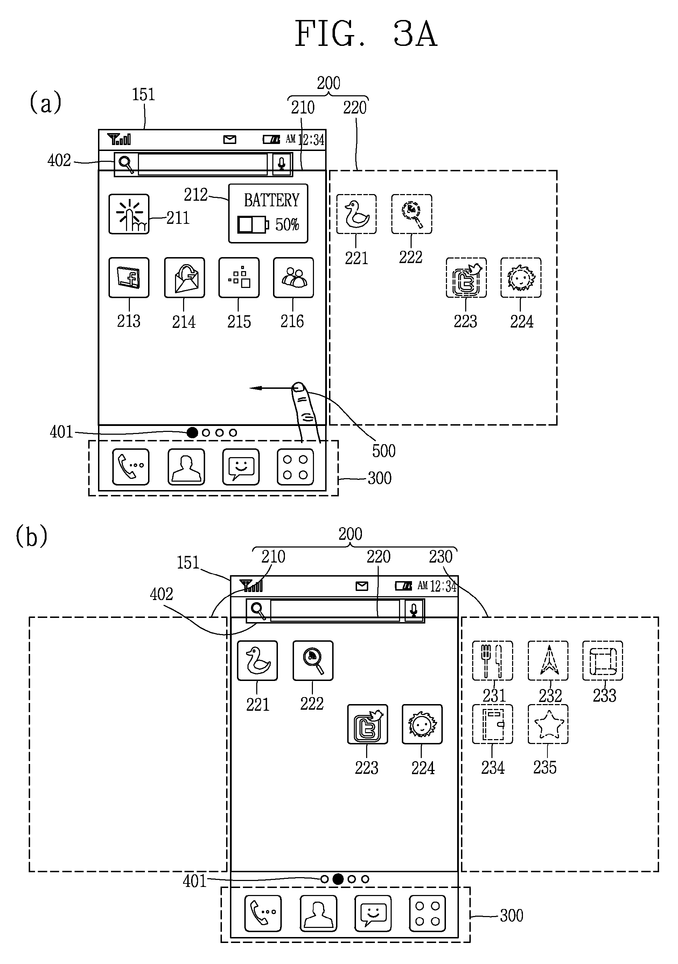

In particular, FIGS. 3A-3C are diagrams, each illustrating a method of switching a page output to the display unit 151 to a different page in the mobile terminal 100 according to one embodiment of the present invention.

The controller 180 of the mobile terminal 100 according to one embodiment of the present invention outputs an idle screen, a home screen, or a menu screen on the display unit 151. At least one object is included in the idle screen, the home screen, or the menu screen, and the object is an icon or widget for an application installed in the mobile terminal 100.

Further, the idle screen, the home screen, or the menu screen, as illustrated FIG. 3A(a), includes multiple home screen pages 200 (or pages 210 and 220) depending on a user selection or on the number of the applications installed in the mobile terminal 100.

Further, as illustrated in FIG. 3A(a), an identification information region 401 that indicates to which of the multiple home screen pages the currently-output objects correspond in terms of paging order and a home screen page 200 on which the object is displayed are included in the idle screen, the home screen page or the menu screen. In addition, a basic region 300, on which icons corresponding to a specific application that is predetermined through the user selection or by the controller 180 are fixedly displayed, is additionally included in the idle screen, the home screen page, or the menu screen.

Even though the currently-output home screen page 210 is switched to the different home screen page 220, the icons displayed on the basic region 300 continue to be output to the basic region 300. Further, the "home screen page" that includes the objects such as the icon and the widget is described below, without discriminating between the terms the idle screen, the home screen page and the menu screen.

In more detail, the home screen page has a size that corresponds to the display unit 151 and includes as many objects as is predetermined to be easily recognizable to the user. In addition, the home screen page is switched from the home screen page currently displayed on the display unit 151 to the home screen page different from the home screen page currently displayed, through a touch gesture applied by the user.

That is, the controller 180, as illustrated in FIGS. 3A(a) and 3A(b), switches the first home screen page 210 output to the display unit 151 to the second home screen page 220, in response to the touch gesture 500 that is applied to the display unit 151. Also, in addition to the first and the second home screen pages 210 and 220, many of the home screen pages, such as third and fourth home screen pages (the third home screen 230 is shown in FIG. 3A(b)), may be output to the display unit 151. The number of the home screen pages is determined through the user selection, or depending on the number of the applications installed in the mobile terminal.

FIG. 3A(a) illustrates icons orwidgets 211-216 being displayed on the first home screen 210 and icons 221-224 being displayed on the second home screen 220. FIG. 3A(b) illustrates icons or widgets 231-235 being displayed on the third home screen 230. The user can select any of the icons when the corresponding home screen is displayed on the display unit 151 to execute the corresponding application. Icon 212 also displays an amount of battery power left on the terminal and thus is an indication icon. A control window 402 is also displayed on a top portion of the first and second home screen pages 210 and 220 in the example shown in FIG. 3A.

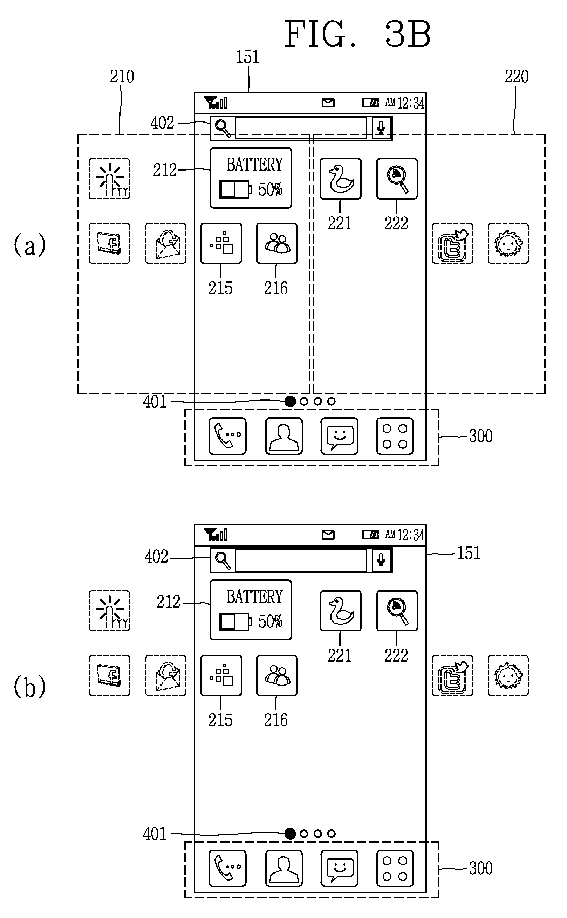

In addition, as illustrated in FIG. 3B(a), parts of the multiple home screen pages 210 and 220 are output to the display unit 151 at the same time, by the touch gesture 500 described above, and any one of the multiple home screen pages is output to the display unit when the touch gesture is no longer applied.

In addition, the home screen page, as illustrated in FIGS. 3B(a) and 3B(b), is transparently displayed so discrimination is not made between an edge and an area of the home screen page and the different screens displayed on the display unit 151. That is, the controller 180, as illustrated FIG. 3B(b), does not display a boundary line and displays only the objects (the icon or the widget) included in the home screen page.

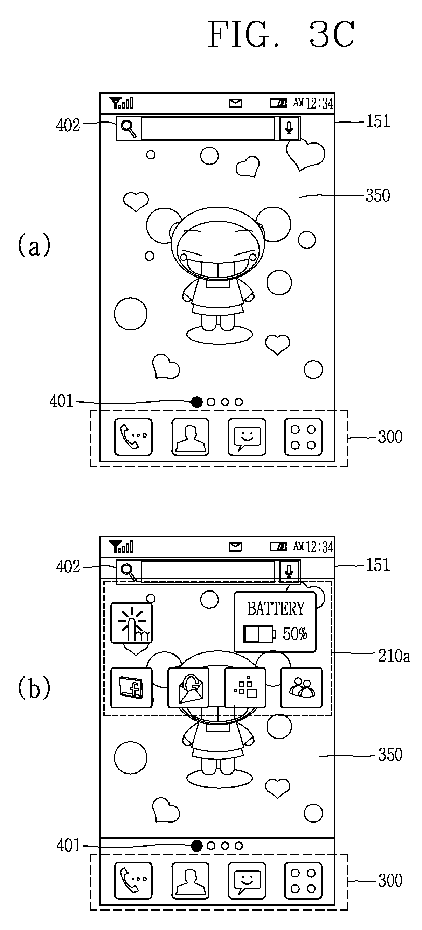

In addition, a wallpaper screen 350 (or, a background screen 350), as illustrated in FIG. 3C(a), is output to the display unit 151 through the user selection and through a setting by the controller 180, and the controller 160 controls the display unit so the wallpaper screen 350 and the home screen page 210 overlap. Area 210a illustrates the icons of the home screen page 210.

When the home screen page 210 output to the display unit 151 is switched to the different home screen through the user selection, the controller 180 controls the display unit 151 so the wallpaper screen 350 is not switched. Furthermore, the controller 180 controls the display unit 151 so the home screen page has transparency so that the wallpaper screen can be discriminated, and in this instance, the objects (the icons, or the widget) included in the home screen page are opaquely displayed so the user can discriminate them as identified by the area 210a.

As described above, in the mobile terminal according to an embodiment of the present invention, any one of the multiple home screen pages is output to the display unit 151, and the currently-output home screen page is switched to the different home screen page, based on the touch gesture applied by the user.

Furthermore, in the mobile terminal according to an embodiment of the present invention, when the currently-output home screen page is switched to the different home screen page, any one of the home screen page and a shape of the objects included in the home screen page is transformed, based on the touch gesture.

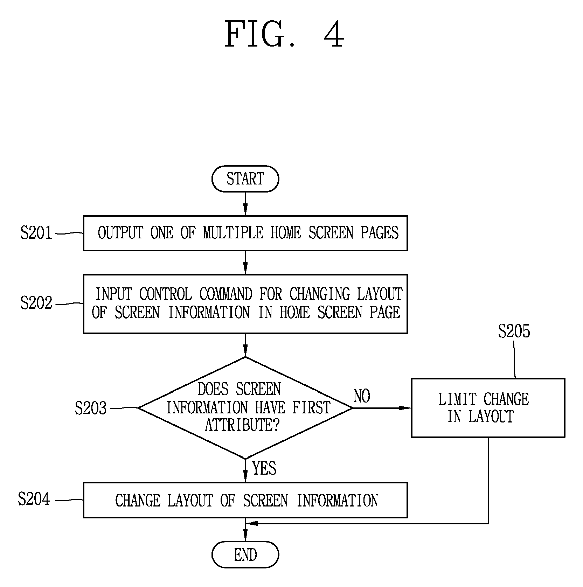

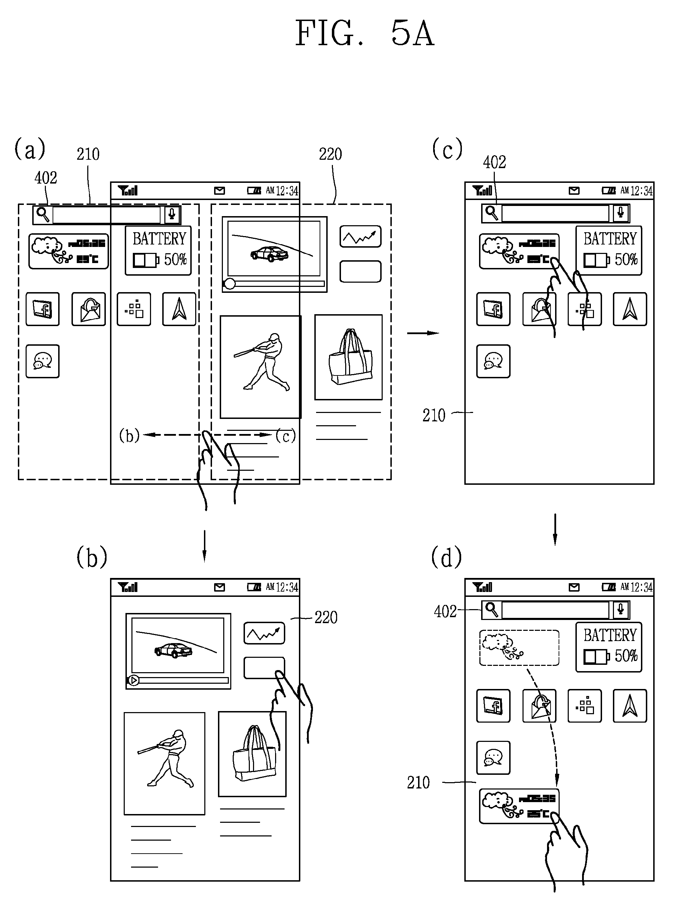

A method of controlling the display unit 151 that outputs screen information a layout of which is unchangeable to the home screen page is described below referring to the accompanying drawings. In particular, FIG. 4 is a flowchart illustrating a method of changing a layout of the screen information depending on an attribute of the screen information in the mobile terminal according to one embodiment of the present invention. FIGS. 5A(a) to 5A(d) are diagrams, each illustrating the method of FIG. 4 according to an embodiment of the present invention.

Referring to FIG. 4 and FIGS. 5A(a) to 5A(d), the display unit 151 outputs one of the multiple home screen pages (S201). The controller 180 controls the display unit 151 so any one of the multiple home screen pages is output, based on the user touch input. The user touch input corresponds to a sliding touch input that is slid on the display unit 151 in a given direction. In particular, the controller 180, as illustrated in FIG. 5A(a), controls the display unit 151 so any one of the first home screen page 210 and the second home screen page 220 is selectively output, based on the user touch input,

According to an embodiment of the present invention, the first and second home screen pages include their respective different properties. For example, the first home screen pages 210 corresponds to the general home screen page described above. That is, the screen information in the first home screen page 210 includes the control window 402 to which a user control command is applied, at least one icon, the widget, and the like to which a command to execute each application is applied. The control window 402 is a search word input window for conducting a search using the mobile terminal or a web browser.

Referring to FIGS. 5A(a) and 5A(c), the controller 180 controls the display unit 151 so the first home screen page 210 is output, based on the user touch input, which is a movement in a (c) direction. In addition, the first home screen page 210 is defined as having a first attribute that can change a screen information layout of the first home screen page 210. The layout here means an arrangement in which the icons and the widget are placed in a particular order and position. That is, the icons and the widget are configured to make up the particular layout, through the user's setting. In addition, the screen information layout of the first home screen page 210 having the first attribute is changed through the user control command.

The second home screen page 230 is configured to have a second attribute, different from the first attribute. The second attribute is described below referring to FIG. 5A(b).

Referring to FIG. 5A(d), if the control command to change the layout is input to the display unit 151 (S202), the controller 180 determines whether or not the first home screen page 210 has the first attribute (S203). If it is determined that the first home screen 210 has the first attribute (Yes in S203), the controller 180 controls the display unit 151 so the screen information layout of the first home screen page 210 is changed, based on the control command (S204).

For example, the control command corresponds to the touch input that changes a position of the widget by applying a long touch to the widget. That is, the positions of the widget and icon are changed, or the widget and icon are deleted from the screen information, according to the control command. A new widget or icon may additionally be included in the screen information. In addition, the controller 180 controls the display unit 151 so a graphic image such as the icon to which the command to execute the substantially same application is applied is changed, based on the control command.

However, the controller 180 controls the display unit 151 so a position of the control window 402 included in the first home screen page 210 is not changed by the control command. That is, deletion of or change in the control window 402 is limited while the different home screen pages are displayed on the display unit 151.

On the other hand, referring to FIGS. 5A(a) and 5A(b), the controller 180 controls the display unit 151 so the second home screen page 220 is output, according to the sliding user touch input in a direction (b). The second home screen page 220 has a second attribute different from the first attribute. The second attribute here is defined as limiting the change in the screen information layout of the second home screen page 220 by the applying of the control command of the user.

For example, the second home screen page 220 is formed in the shape of a web browser. That is, the screen information in the second home screen page 220 has a specific uniform resource locater (URL), and corresponds to a web browser screen that is received from a specific server. The URL is set by a mobile telecommunication company that provides the user with a wireless telecommunication service. For example, the mobile telecommunication company designates the URL from which the screen information including an advertisement for the mobile communication company, a new item of information and the like is provided, and outputs the screen information to the second home screen page 230.

Accordingly, the screen information layout of the second home screen page 220 is the page that is set. The screen information in the second home screen page 220 is configured from at least one of an image, a text and moving image. In addition, each of the image, the text, and the moving image is formed as at least one graphic image to which the touch input that changes the details thereof is applied. That is, each configuration of the second home screen page 220 is created so the configuration is hyperlinked and thus is connected to a configuration of the image, the text and the moving image, different from the configuration, or to a database. The image, the text, and the moving image are arranged according to the predetermined layout.

The screen information layout of the second home screen page 220 is predetermined and is not changed by the user control command. This attribute of the second home screen page 220 is defined as the second attribute. If the control command is applied to the display unit 151 to which the second home screen page 220 is output, the controller 180 determines whether or not the screen information in the second home screen page 220 has the first attribute (S203). If it is determined that the screen information does not have the first attribute (No in S203), the controller 180 controls the display unit so the change in the screen information layout is limited or prevented (S205).

That is, if the attribute of the home screen page output to the display unit 151 is not the first attribute, the attribute of the home screen page corresponds to the second attribute. Accordingly, even though the control command, for example, a drag and drop type touch is applied to the display unit 151, the controller 180 does not change positions of the image and the like included in the screen information in the second home screen 220. That is, the user cannot change the content included in the screen information in the second home screen page 220.

Further, referring to FIG. 5A(b), the screen information in the second home screen page 220 does not include the control window 402. That is, the second home screen page 220 is displayed on an entire display region of the display unit 151 that occupies one surface of the mobile terminal, and thus the displaying of the screen information other than the screen information in the second home screen page 220 is limited.

Accordingly, for example, the mobile telecommunication company provides the user with the information by using the entire surface of the display unit 151, and prevents the touch input unrelated to the screen information in the second home screen page 220 from being applied, while outputting the second home screen page 220 to the display unit 151. Accordingly, the user can improve his/her concentration on the information provided through the second home screen page 220.

If the home screen page output to the display unit 151 is changed, the controller 180 again determines the attribute of the home screen page output to the display unit 151, based on the user touch input. In addition, if a touch input type (for example, the drag and drop after inputting the long touch) that changes the screen information layout of the first home screen page 210 is applied to the display unit 151 to which the second home screen page 220 is output, the controller 180 recognizes this as a different control command and thus controls the mobile terminal 100.

For example, if the control command that is substantially the same type as the control command for changing the screen information layout of the first home screen page 210 is applied when the second home screen page 220 is output, the controller 180 controls the mobile terminal, for example, so that the display unit 151 is controlled so a different screen connected through the user of the hyperlink in the second home screen page 220 is output, or so that the memory 160 is controlled so the content to which the control command is applied is stored in the mobile terminal 100.

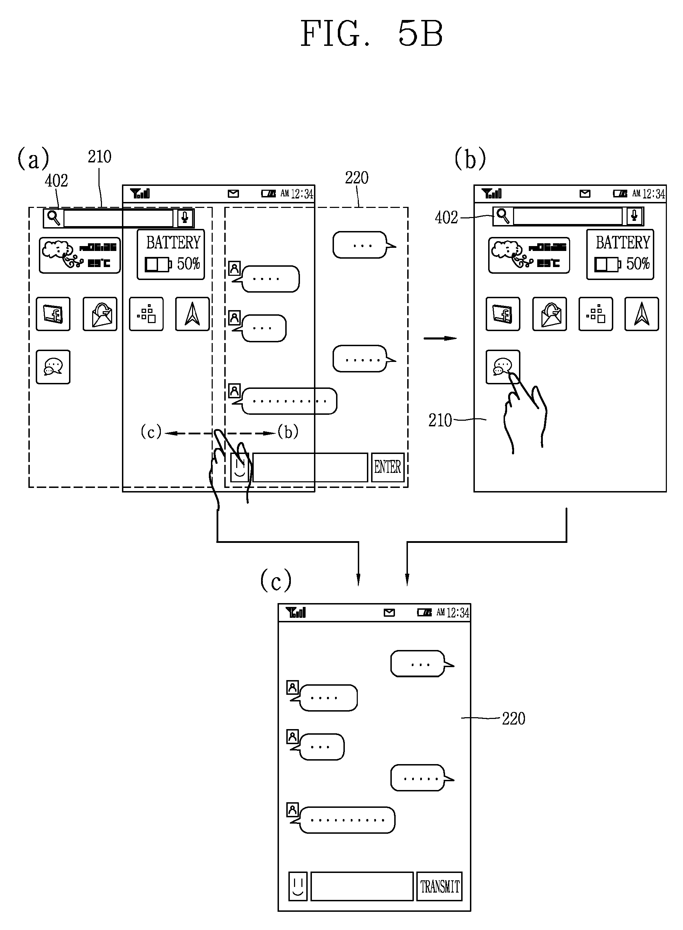

Next, FIGS. 5B(a) to 5B(c) are diagrams, each illustrating the method of FIG. 4 according to another embodiment.

According to the touch input applied by the user to the display unit 151, the controller 180 controls the display unit 151 so any one of the first home screen page 210 and the second home screen page 220 is output.

According to an embodiment of the present invention, the second home screen page 220 is defined as the execution screen of a predetermined application. That is, the execution screen of the application includes at least one item of content, and the items of content are arranged according to a specific layout.

As described referring to FIG. 4, if the second home screen page 220 defined as the execution screen of the application is output to the display unit 151 and the control command is applied, the controller 180 determines the attribute of the execution screen. Even though the control command is applied to the display unit 151 to which the second home screen page 220 including the second attribute is output, the controller 180 controls the display unit 151 so the change in the layout of the content included in the execution screen is limited or prevented.

In addition, if the control command for changing the layout of the first home screen page 210 is input while the second home screen page 220 is output to the display unit 151, the controller 180 controls the execution screen. In more detail, referring to FIGS. 5B(b) and 5B(c), the controller 180 controls the display unit 151 so the first home screen page 210 is output, according to the touch input. The screen information in the first home screen page 210 includes at least one icon to which the execution command for executing at least one application is applied. For example, the screen information in the first home screen page 210 includes an execution icon for executing a conversation application that enables a text message exchange with the user of the external mobile terminal by transmitting and receiving a wireless signal to and from the external mobile terminal.

If the execution command of the user is applied to the execution icon, the controller 180 controls the display unit 151 so the application is executed and the execution screen of the application is output. Referring to FIG. 5B(c), the second home screen page 220 corresponds to the execution screen of the conversation application that enables the text exchange with the user of the external mobile terminal by transmitting and receiving the wireless signal to and from the external mobile terminal. The execution screen of the application is configured so the items of content are arranged according to the layout that is set, for example, by a producer of the application. In addition, the layout of the content added by the user is not changed by the control command of the user.

For example, when the text message exchange with the external mobile terminal, a position to which the text is output is designated, and this cannot be changed by the user control command that is applied while the execution screen is output. Accordingly, if the touch input, the same type as the control command is input to the display unit 151 while the execution screen is output to the display unit 151, the touch input is recognized as the control command to control the application, or is ignored according to the position of the display unit 151.

For example, if the touch input is applied to a text window to which the text is input, the controller 180 controls the display unit 151 so a keyboard formed so that the text is input through the use of the keyboard is output, and if the touch input is applied to the content of the previously-output conversation, the controller 189 controls the memory 160 so the text corresponding to the content is copied and stored. In addition, if the touch input is applied to a region on the display unit 151, which does not cause the output of any content, the controller 180 controls the mobile terminal so the touch input is ignored.

That is, according to an embodiment of the present invention, the execution screen of the application is output to the second home screen page 220. The second home screen page 220 does not include the items of content other than the execution screen. Accordingly, the user can control the application without being interrupted by the other items of content.

The user can set the application corresponding to the execution screen output to the second home screen page 220. In addition, according to the user setting, the display unit 151 is controlled so each of the execution screens of the multiple applications is output to the home screen page. Accordingly, the user can provide the setting so the execution screen of a specific application is output to any one of the home screen pages, and can view the execution of the application without going through execution processing that uses the execution icon.

As described above, the screen information having a specific URL or the execution screen of a specific application is output to the home screen page, and the home screen page is updated with a new item of information. The update here is a task of manually or automatically changing, adding, or deleting the content so the content is suitable for the current situation. This means that the screen information in the second home screen page 220 is changed. A method of updating the screen information in the second home screen page 220 is described below.

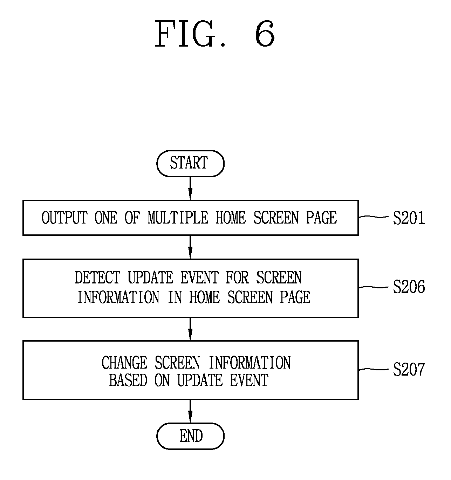

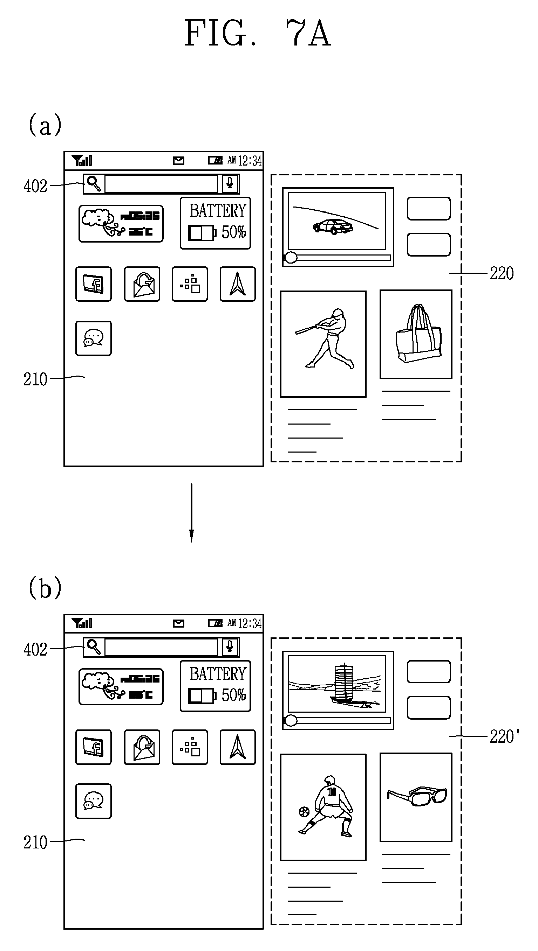

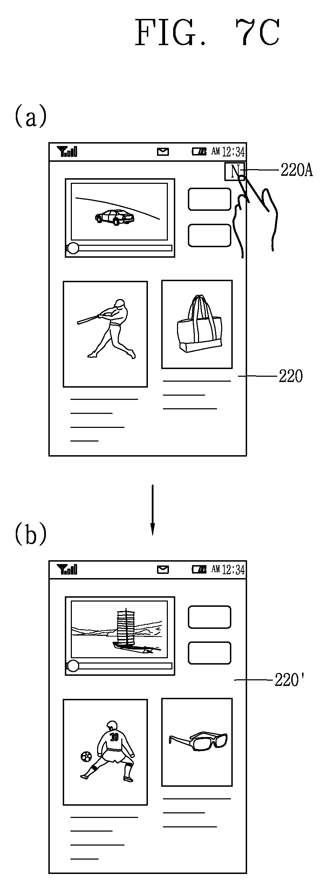

In particular, FIG. 6 is a flowchart illustrating the method of updating the screen information, and FIGS. 7A(a) and 7A(b) to FIGS. 7C(a) and 7C(b) are diagrams, each illustrating the method of FIG. 6 according to various embodiments. As shown in FIG. 6, the controller 180 outputs any one of the multiple home screen pages, based on the user touch input (S201). An event that the items of screen information in the multiple home screen pages are updated is detected (S206), and the screen information is changed based on the event (S207).

The update event according to each embodiment and the method relating to the update event will now be described. In particular, FIGS. 7A(a) and 7A(b) are diagrams, each illustrating the home screen page 220 including the second attribute is not being output to the display unit 151. A second home screen page 220', a modified second home screen page in FIG. 7A(b) includes an updated screen information. The controller 180 according to an embodiment of the present invention updates the screen information in the second home screen page when the second home screen page is not output to the display unit 151.

For example, the controller 180 performs the control so an update sign and data on the screen information to be changed are received from a server that is set through the wireless communication unit 110 at a predetermined interval of time and thus the screen information in the second home screen page 220 is changed. Alternatively, when a connection with the wireless communication unit 110 is again established when the connection is canceled, the update signal is set to be received.

According to an embodiment of the present embodiment, the screen information in the second home screen page is automatically updated without the user control command. Accordingly, if the second home screen page is output to the display unit 151, based on the user touch input, the second home screen page 220' displaying the immediately-updated screen information is provided to the user.

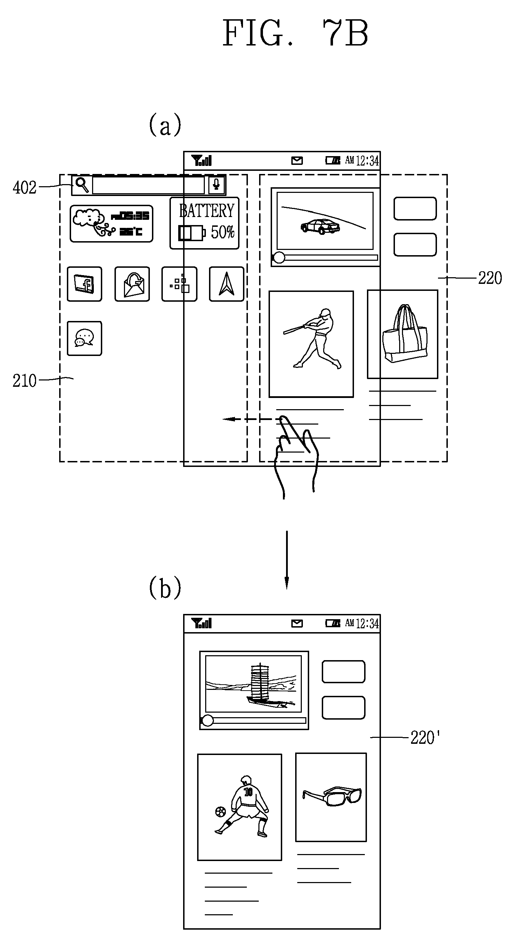

According to the embodiment illustrated in FIGS. 7B(a) and 7B(b), the update event is defined as the output of the second home screen page to the display unit 151 based on the user touch input. That is, the controller 180 controls the wireless communication unit 110 so if the second home screen page is output to the display unit 151, the update signal and the data are received.

In addition, the control window 402 controls the wireless communication unit 110 so if the second home screen page 220 is output to the display unit 151 for a predetermined time (about several seconds), this is recognized as the update event and thus the update signal is received. Accordingly, the screen information in the second home screen page is changed each time the user wants to be provided with the screen information in the second home screen page. Therefore, electric power is not wasted in receiving the wireless signal through the wireless communication unit 110 and a special control command is unnecessary to update the screen information.

According to the embodiment illustrated in FIGS. 7C(a) and 7C(b), the home screen page 220 includes a graphic image 220A to which the control command for updating the screen information in the second home screen page 220. The user touch input that is applied to the graphic image 220A is defined as the update event. Accordingly, the controller 180 controls the wireless communication unit 110 so the update signal and the data are received, based on the touch input applied to the graphic image 220A.

According to an embodiment of the present invention, the user can be provided with the pre-update screen information because he/she can control the update event whenever desired.

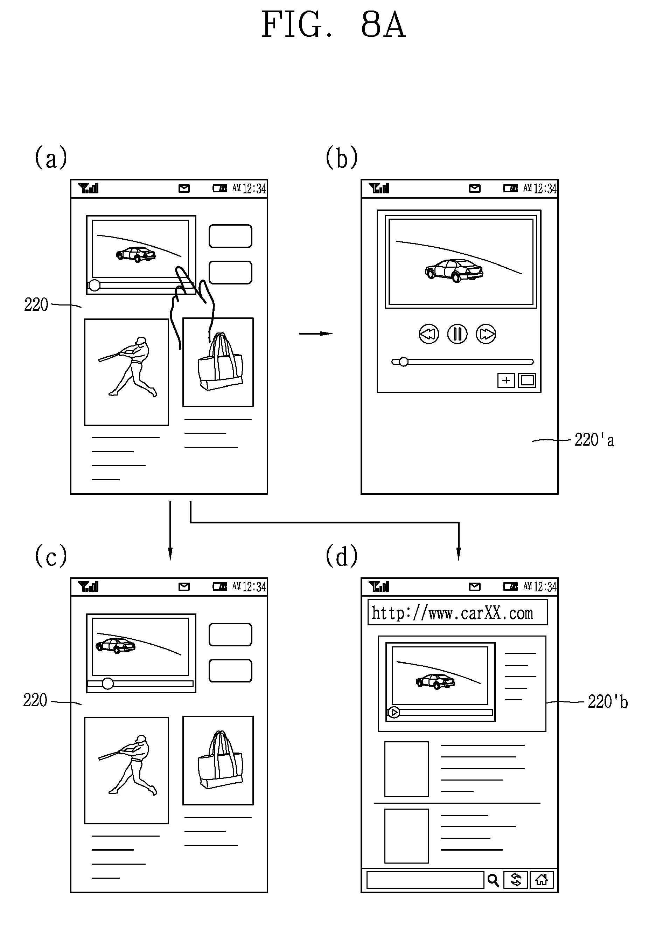

Next, FIGS. 8A(a) to 8A(d) and 8B(a) to 8B(c) are diagrams, each illustrating a method of controlling the screen information according to various embodiments. Referring to FIG. 8A(a) to 8A(d), a method of outputting related content associated with the content included in the second home screen page 220 is described. In more detail, referring to FIGS. 8A(a), the touch input is applied to a moving-image reproduction image included in the screen information in the second home screen page 220 in order to output the moving image.

FIG. 8A(b) is a diagram illustrating an execution screen 220'a of a moving-image reproduction application that enables the moving images to be output. If the touch input is applied to the moving-image reproduction image, the controller 180 activates the moving-image reproduction application. That is, the controller 180 performs the control so reproduction is performed on a reproduction file linked to the moving-image reproduction image in the moving-image reproduction application.

That is, if the content to be displayed is included in the second home screen page 220, based on the user control command, and the user control command is applied to the content, the controller 180 controls the mobile terminal 100 so the content is reproduced or an application for outputting information corresponding to a hyperlink address retained in the content is executed. That is, the controller 180 controls the display unit 151 so the switch is made from the second home screen page 220 to the execution screen of the application.

According to the present embodiment, the user is provided with the information in a more suitable manner, because the switch is made to the application suitable for the content to which the user touch input is applied.

FIG. 8A(c) is a diagram illustrating an embodiment in which a moving image file is reproduced on the second home screen page 220. That is, the controller 180 controls the mobile terminal 100 so the content to which the touch input is applied is reproduced on one region of the second home screen page 220 on which the content to which the touch input is applied is displayed.

That is, if the touch input is applied to the moving-image reproduction image, the controller 180 controls the display unit 151 so the moving image file is reproduced on the second home screen page 220. Further, the content included in the screen information in the second home screen page 220 is not changed. Accordingly, the controller 180 controls the display unit 151 so the second home screen page 220 is switched directly to the first home screen page 210, based on the user touch input.

According to the present embodiment, the user can continue to be provided with different items of content included in the second home screen page 220, while reproducing the moving image.

If the moving-image reproduction image included in the screen information in the second home screen page 220 has a predetermined URL, the controller 180 controls the mobile terminal so the web browser 220'b is executed according to the URL, based on the touch input applied to the moving-image reproduction image. In addition, the controller 180 controls the display unit 151 so the moving image file is reproduced on the web browser.

According to the present embodiment, since the moving image is reproduced through the use of the URL, there is no need to store the moving image file in the mobile terminal 100, and the web browser screen is output that includes different items of content having the URL. Accordingly, the user can be provided with not only the moving image, but also the information relating to the moving image.

The reproduction image for reproducing the moving image included in the second home screen page 220 is described above, but the reproduction image is not limited to this function. For example, in addition to the reproducing of the moving image, changes in various items of screen information in the second home screen page 220 are possible, such as the outputting of a sound, and the outputting or modifying of a new text.

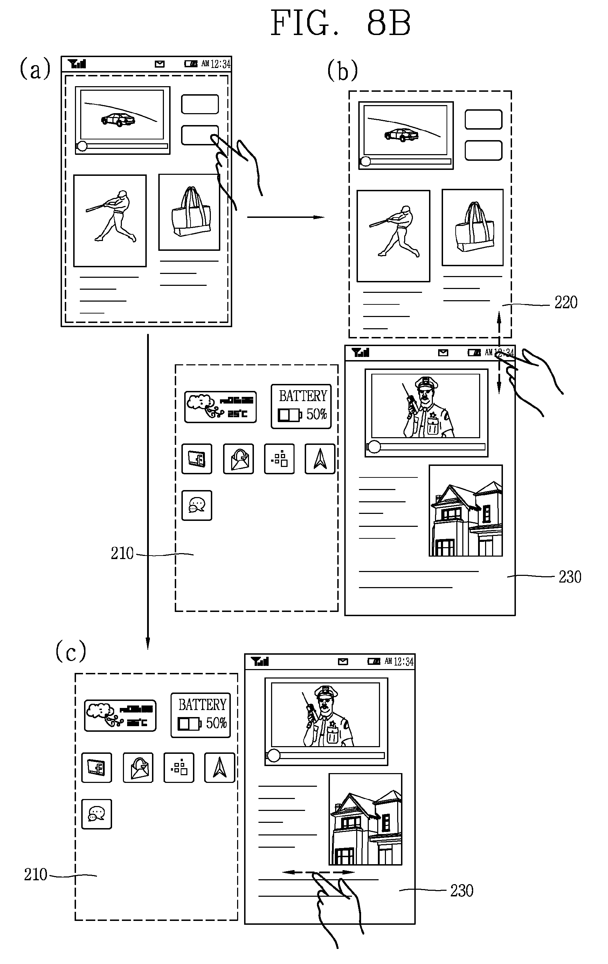

Next, FIGS. 8B(a) to 8B(c) are diagrams, each illustrating a method of generating a third home screen page 230' displaying the second screen information, based on the touch input applied to the first screen information in the second home screen page 230220.

If the touch input is applied to the display unit 151 outputting the second home screen page 220, the controller 180 controls the display unit 151 so the switch is made from the second home screen information 220 to the third home screen page 230'.

That is, the controller 180 controls the memory 160 so the second home screen page 200 including the second screen information is stored. In addition, the controller 180 controls the mobile terminal 100 so at least one of the home screen pages is additionally formed according to the touch input applied to the first screen information in the second home screen page 220.

Accordingly, the controller 180 controls the display unit 151 so the switch is made from the third home screen page 230' to the second home screen page 220, based on the touch input applied to the display unit 151.

For example, the switch is made from the third home screen page 230' to the second home screen page 220, based on the user gesture (FIG. 8A(b)) that is a movement from top to down, or on the user gesture (FIG. 8A(c)) that is a movement from left to right on the display unit 151.

For example, the control unit 180 controls the display unit 151 so if the user gesture, the movement from left to right is applied to the display unit 151, the switch is made from the third home screen 230' to the first home screen page 210, and if the gesture, the movement from top to down is applied to the display unit 151, the switch is made from the third home screen page 230' to the second home screen page 220.

Accordingly, the user can be again provided with the second home screen page, because even though the third home screen page providing the different screen information is generated based on the touch input, the second home screen page does not disappear and is stored.

The embodiment in which the change in the layout of the web page to the home screen page is limited is described above. A method of setting the web browser screen and a method of controlling the web page output to the home screen page, in a case where the screen information including the second attribute, which is output to the home screen page, is the web browser screen are described in detail below.

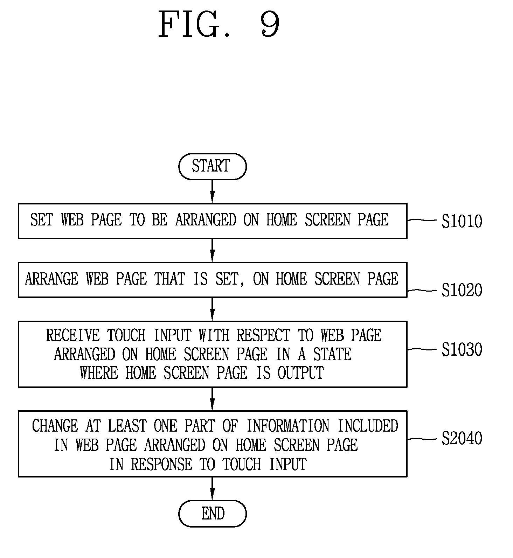

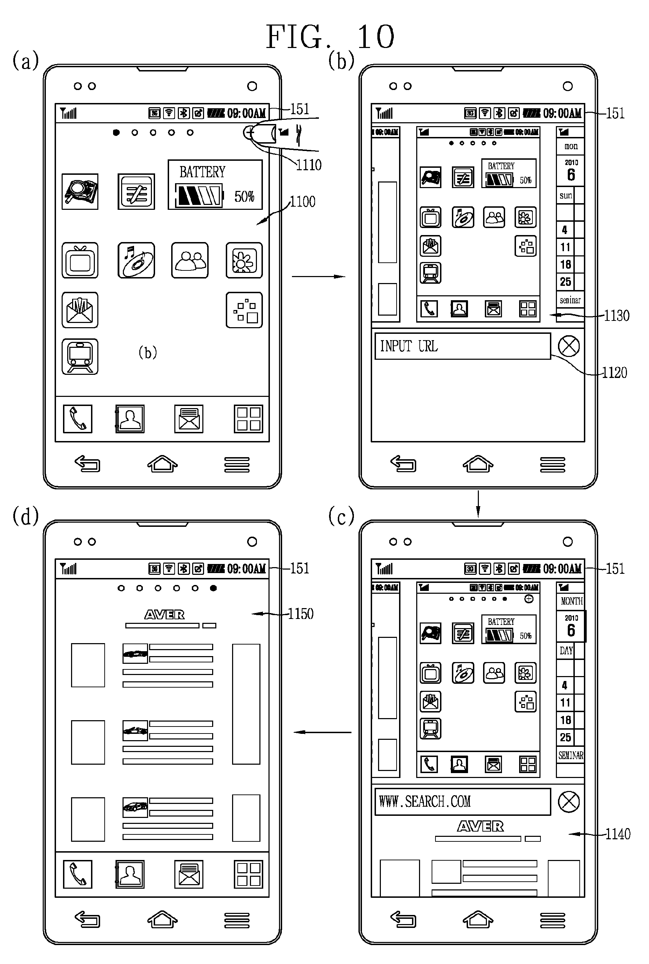

First, in the mobile terminal and the method of controlling the mobile terminal according to one embodiment of the present invention, the method of setting the web page to be arranged on the home screen page is described in detail below referring to the accompanying drawings. FIG. 9 is a flowchart illustrating the method of setting the web browser to be arranged on the home screen page in the mobile terminal 100 according to one embodiment of the present invention, and FIGS. 10(a) to 10(d) are diagrams, each illustrating the method of FIG. 9.

As described above, in the mobile terminal according to one embodiment of the present invention, arranging the web page on the screen page is possible. In addition, the web page arranged on the home screen page may be the web browser screen that corresponds to a specific URL, based on the user selection.

In order to arrange the web page based on the user selection, on the home screen page, the web page to be arranged on the home screen page is set in the mobile terminal according to one embodiment of the present invention (S1010). That is, the controller 180 receives an input of URL information on the web page to be arranged on the home screen page from the user, or one region of the web page is set. In this manner, the web page to be arranged on the home screen page is set, based on the control command that is input from the user through the input unit 130.

One example in which the web page to be arranged on the screen page is set is described in detail. As illustrated in FIG. 10(a), an icon or widget for an application to be arranged on the home screen page, or an icon 1110 for receiving the control command for the adding the web page is output to a home screen page 1100. Then, if the icon 1110, is selected as illustrated in FIG. 10(a) by the user, the controller 180 is selected as illustrated in FIG. 10(b) outputs an input window 1120 for inputting the URL information on the web page. Here, a screen for inputting the URL information on the web page is configured in various ways.

Then, the screen is configured so if the icon 1110 is selected, the controller 180 determines which of the icon and the widget for the application and the web page is arranged on the home screen page, depending on the user selection. If the input window 1120 is output to the display unit 151, the controller 180 controls a screen configuration with respect to a region 1130 to which the input window 1120 is not output, in various ways. For example, at least one part of the home screen page 1110 is displayed on the region 1130 to which the input window 1120 is not output, in a reduced state, and in addition to the home screen page 1110, at least one of the homes screen pages is output together in a reduced state.

As illustrated in FIGS. 10(b) and 10(c), the URL information (for example, "www.search.com") is input through the input window 1120. The user can input directly the URL information, and can furthermore input a name of the web name. If the URL information is input from the user, the controller 180, as illustrated in FIG. 10(c), outputs a web page 1140 corresponding to the URL information that is input, on one region of the display unit 151. Accordingly, the user can check whether the URL information is properly input, through the web page 1140 output to the one region.

In addition, the controller 180, as illustrated in FIG. 10(c), receives the control command for adding (or, for outputting) the web page corresponding to the URL information that is input, to the home screen page. For example, if a predetermined-type touch input (for example, a drag touch input, a slide touch input, and a long touch input) is applied with respect to the web page 1140, the controller 180 determines that the control command is received.

In this manner, if the setting for adding the web page 1140 corresponding to the URL information that is input to the home screen page, is completed, the controller 180 arranges the web page 1140 on the home screen page (S1020). In this instance, the controller 180 determines which of the multiple home screen pages is arranged on the web page 1140, or determines whether or not a new home screen page is generated to determine the web page 1140, depending on the user selection.

Then the controller 180 determines to what size the web page 1140 is arranged on the home screen page, depending on the user selection. Even after the web page 1140 is arranged on the home screen page, the controller 180 can change the size of the web page 1140, based on the user control command.

Accordingly, as illustrated in FIG. 10(d), the web page can be output, in its entirety, to a newly-generated home screen page 1150, as one example. Further the home screen page on which the web page is arranged is output to the display unit 151, the controller 180 controls the display unit 151 so the latest information is included in the web page. In this instance, the controller 180 updates the information included in the web page, based on the update information provided by the external server providing the web page with the information.

In addition, the controller 180 updates the information only if the web page is output to the display unit 151, and otherwise, continues to update the information included in the web page at a predetermined interval of time. Furthermore, when the web page is output to the display unit 151 along with the home screen page, the controller 180 can continue to update the information included in the web page at the predetermined interval of time.

In addition, it may be manually determined whether or not the web page is updated, depending on the user selection. Further, the web page, based on the control command with respect to the web page output to the home screen page. The control command is received through the touch input with respect to the web page.

That is, when the home screen page is output, the controller 180 receives the touch input with respect to the web page arranged on the home screen page (S1030). The touch input, as illustrated in FIG. 10(d), may be the touch input for selecting a specific item of information (for example, content corresponding to news accounts) of the items of information included in the web page 1140 and outputting detailed information relating to the specific item of information.

In this manner, if the touch input is received with respect to the web browser screen, the controller 180 changes at least one part of the information included in the web page arranged on the home screen page (S1040). That is, the controller 180 changes the information included in the web page so it is possible to web-surf the web page output to the home screen page, based on the user selection.

It is also possible to switch to the web browser screen having the URL information different from the URL information on the web page arranged on the home screen page, based on the control command with respect to the web page arranged on the home screen page. Further, if the information output to the web page arranged on the home screen page is changed as described above, the controller 180 maintains the changed information, as it is.

In addition, the controller 180 maintains the changed information for a given time. When the given time elapses, the controller 180 automatically switches the web page arranged on the home screen page to the web page corresponding to the URL information that is initially set by the user.

In the mobile terminal according to one embodiment of the present invention and the method of controlling the mobile terminal, as illustrated above, the web page is arranged on the home screen page, and the information included in the web page is changed when even though the touch input is applied with respect to the web page arranged on the home screen page, the web page continues to be arranged on the home screen page without executing the web browser. As a result, a web surfing function can be provided on the home screen page.

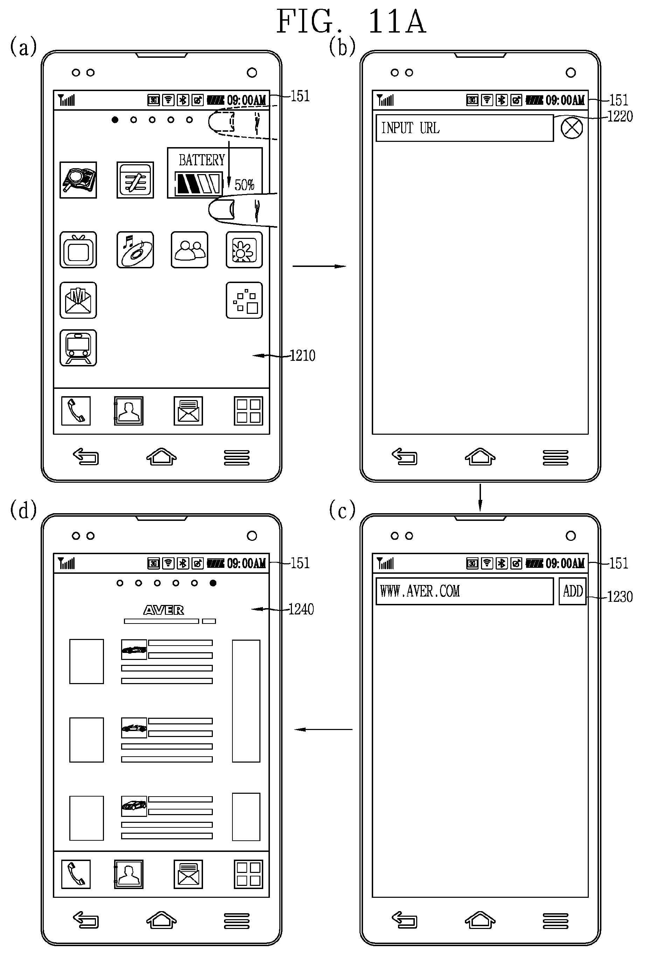

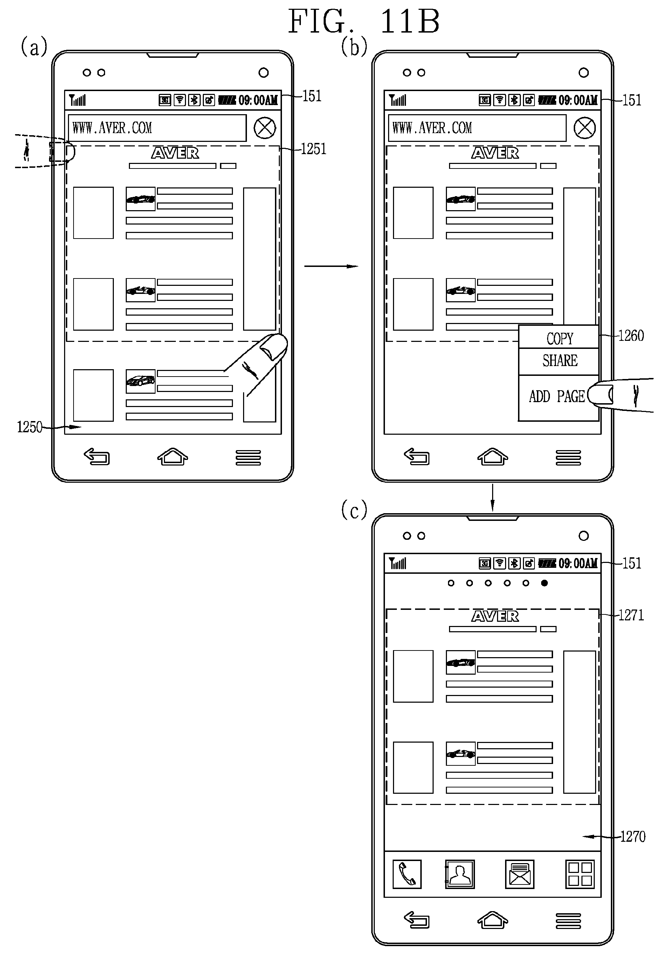

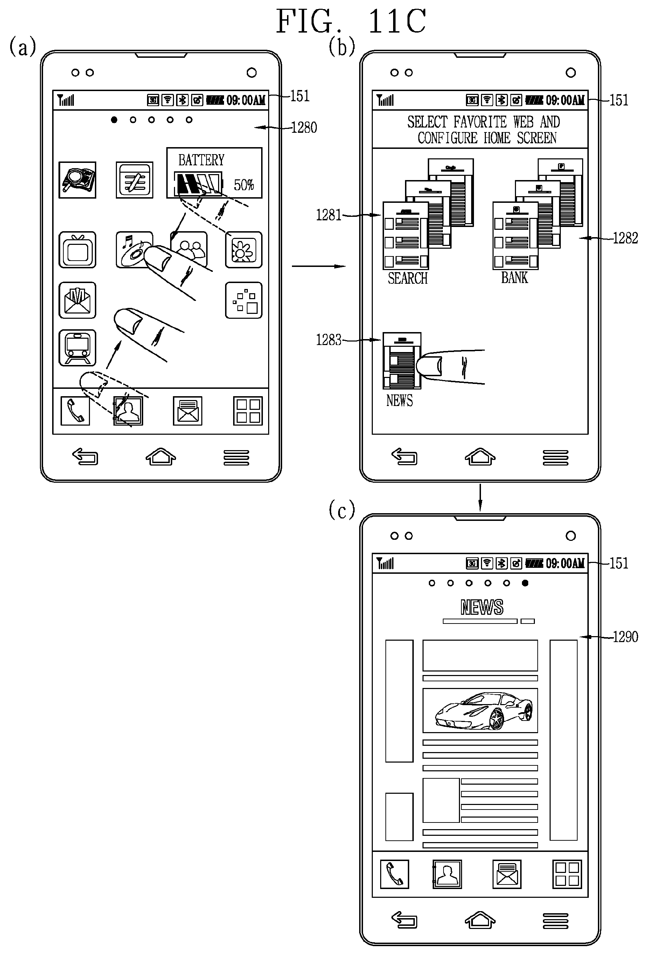

Embodiments in which the web page to be arranged on the home screen page is set are described in detail below referring to the accompanying drawings. In particular, FIGS. 11A(a) to 11A(d), FIGS. 11B(a) to 11B(c), and FIGS. 11C(a) to 11C(c) are diagrams, each illustrating a method of selecting the web browser screen to be arranged on the home screen page in the mobile terminal 100 according to one embodiment of the present invention.

As described above in FIGS 10(a) to 10(d), in the mobile terminal according to one embodiment of the present invention and the method of controlling the mobile terminal, the input window for setting the web page to be arranged on the home screen page is output by using the icon output to the home screen page. In addition, the controller 180 is enabled to set the web page in various methods in addition to the method described above.

As one example, an input window 1220 for inputting the URL information on the web page is output as illustrated in FIG. 11A(b), based on the predetermined-type touch input with respect to a predetermined one region of the display unit 151, as illustrated in FIG. 11A(a).

Further, the predetermined-type touch input may be the drag touch input with respect to the one region, and the one region may be displayed to be distinguishable from the other regions so as to be recognizable to the user. In addition, only if the home screen page is output to the display unit 151, the controller 180 outputs the input window for inputting the URL information, in response to the touch input with respect to the one region. Then, even though the screen information other than the home screen page is output to the display unit 151, the controller 180 outputs the input window for inputting the URL information, in response to the touch input with respect to the one region.

After the URL information is input through the input window 1220 as illustrated in FIGS. 11A(b) and 11A(c), the controller 180, as illustrated in FIG. 11A(d), outputs the web page corresponding to the URL information that is input, to a home screen page 1240, depending on the user selection. Here, the method of arranging the web page on the home screen page may be applied in the same manner as described referring to FIG. 9 and FIGS. 10(a) to 10(d).

As another example in which the web page to be arranged on the home screen page is set, in the mobile terminal according to one embodiment of the present invention, the web page is arranged on the home screen page, based on the control command applied when the web page is output through the web browser as illustrated in FIG. 11B(a). Then, the controller 180 arranges only a specific one region, selected by the user of the web pages on the home screen page.

If one region 1251 of a web page 1250, as illustrated in FIG. 11 (b), is selected through the touch input with respect to the display unit 151, the controller 180 provides the user with information on a function that is performed in cooperation with the one region 1251 through a pop-up window 1260, as illustrated in FIG. 11B(b). Then, if a home screen page addition function is selected by the user, a web page 1271 corresponding to the one region 1251 selected through the web browser is output to a home screen page 1270, as illustrated in FIG. 11B(c). Here, the method of arranging the web page on the home screen page may be applied in the same manner as described referring to FIG. 9 and FIGS. 10(a) to 10(d).

However, the present embodiment is not limited to the web browser screen, and may be applied to the screen information having the second attribute. For example, the controller 180 controls the display unit 151 so a pop-up window 1260 is output from the execution screen of the application and the execution screen is arranged on the home screen page according to the user touch input.

As another example in which the web page to be arranged on the home screen page is set, in the mobile terminal according to one embodiment of the present invention, the web page is set when an output mode for a home screen page 1280 is switched to a clean view mode as illustrated in FIG. 11(a). Here, the clean view mode is a mode in which, for example, the icon or widget of the application is not output on the home screen page. The clean view mode is activated through a pinch-in or pinch-put touch input when the home screen page is output.

Further, the control unit 180 outputs the input window for inputting the URL information in the clean view mode. Then, the controller 180, as illustrated in FIG. 11C(b), outputs the web browser screens that are set to a bookmark or a favorite. Then, if at least one of the web browser screens 1281-1283 are selected, the controller 180, as illustrated in FIG. 11C(c), outputs a selected web page 1290 to the home screen page. Here, the method of arranging the web page on the home screen page may be applied in the same manner as described referring to FIG. 9 and FIGS. 10(a) to 10(d).

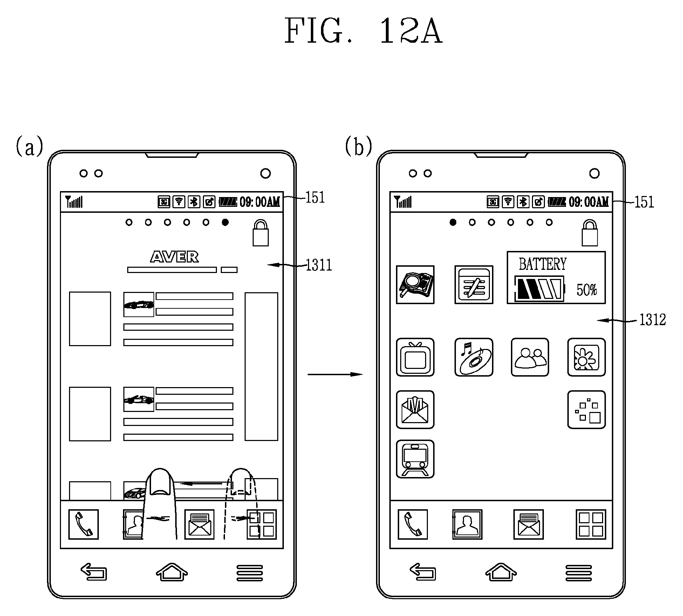

A method of controlling the web page and the home screen page in response to the touch input with respect to the web page output to the home screen page is described in detail below referring to the accompanying drawings. In particular, FIGS. 12A(a) and 12A(b), 12B(a) and 12B(b), and 12C(a) to 12C(c) are diagrams, each illustrating a method of applying the control command with respect to the web page to be arranged on the home screen page in the mobile terminal according to one embodiment of the present invention.

As described above, if the web page is arranged on the home screen page, the controller 180 changes the information included in the web page, based on the touch input with respect to the display unit 151. However, considering a special situation in which the web page is arranged on the home screen page, the controller 180 has to check whether the touch input is a touch input for controlling the web page or a touch input for controlling the home screen page and distinguish between these two kinds of touch input.

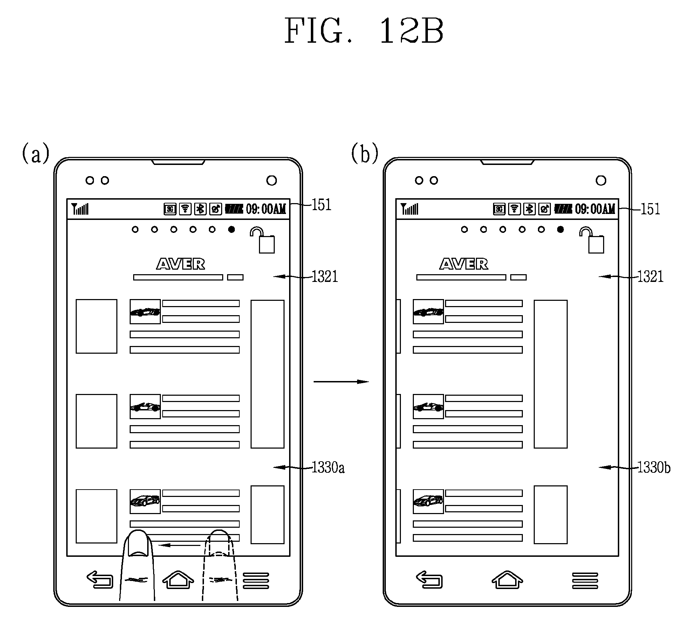

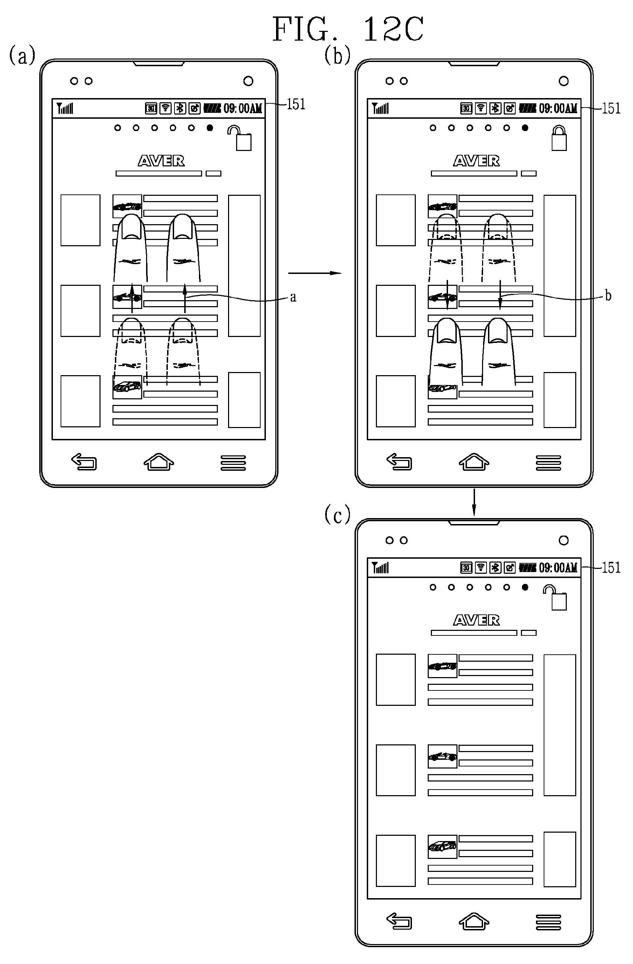

For example, the drag (the slide, or the flicking) touch input, as illustrated in FIG. 12AAA(a), is applied with respect to the display unit 151, in a given direction, the controller 180 needs to check whether the drag touch input is a touch input for moving the information included in the web page, or a touch input for switching the currently-output home screen page to the different home screen page and distinguish between these two kinds of touch input.

Accordingly, in the mobile terminal according to one embodiment of the present invention, there are two kinds of modes. One is a locked mode in which the input of the control command with respect to the web page is limited, and the other is an unlocked mode in which the input of the control command with respect to the web page is allowed.

The settings of the locked mode and the unlocked mode are possible through a function icon output to the display unit 151, and is possible through a hot key (for example, a volume key) provided in the mobile terminal 100. In addition, the settings of the locked mode and the unlocked mode are possible through a voice command of the user.

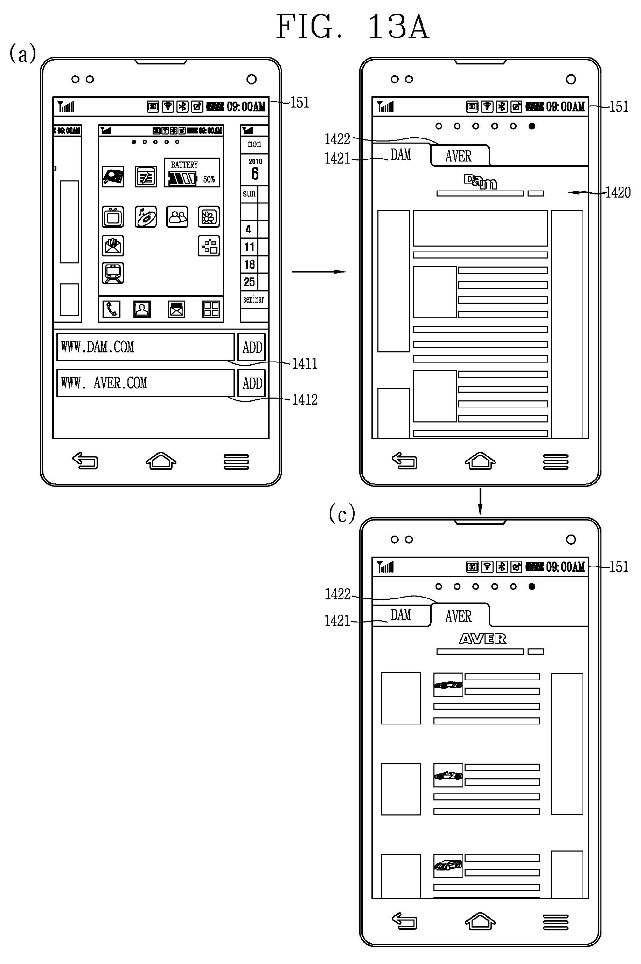

Further, if the control command input mode with respect to the web page is the locked mode, and if the touch input is applied, in a given direction, with respect to a home screen page 1311 on which the web page is displayed, as illustrated in FIG. 13A(a), the controller 180, as illustrated in FIG. 13A(b), moves the currently-output home screen page 1311 to a different home screen page 1312. That is, the web page information is not changed in response to the touch input.

Then, if the control command input mode with respect to the web page is the unlock mode, and if the touch input is applied, in a given direction, with respect to a home screen page 1321, as illustrated in FIG. 12B(a), the controller 180 moves the web page 1330a output to the home screen page 1321 in response to the touch input (refer to 1330b in FIG. 12B(b)). Further, the controller 180 changes at least one part of the information included in the web page, in addition to moving the web page in response to the touch input.

For example, if the entire screen information included in the home screen page is not output to the display unit 151 (for example, if the screen information is in an enlarged state according to the user control, or if a basic size of the screen information is set to a larger size than the size of the display region of the display unit 151), the controller 180 controls the display unit 151 so the remaining regions of the screen information that is not output to the display unit 151 if the gesture is applied to the display unit 151 are output.

In addition, a graphic image (for example, a lock image) indicating whether a current input mode is the locked mode or the unlocked mode is output on the display unit 151, and the locked mode and the unlocked mode, indicated by the graphic image, are changed or set depending on the user selection.

Further, the setting of the locked mode and the unlocked mode is possible through the predetermined-type touch input with respect to the display unit 151. For example, if the touch input, as illustrated in FIG. 12C(a), is applied with respect to at least two points on the display unit 151 and is slid by a predetermined distance in a direction (a), when the control input mode with respect to the web page is the unlocked mode, the controller 180, as illustrated in FIG. 12C(b), changes the control command with respect to the web page to the locked mode. Then, if the touch input, as illustrated in FIG. 12C(b), is applied with respect to at least two points on the display unit 151 and is slid by the predetermined distance in a direction (b), when the control input mode with respect to the web page is the locked mode, the controller 180, as illustrated in FIG. 12C(c), changes the control command with respect to the web page to the unlocked mode.

As described above, in the mobile terminal according to one embodiment of the present invention and the method of controlling the mobile terminal, the control command with respect to the home screen page is discriminated from the control command with respect to the web page, through the setting of the locked mode and the unlocked mode. As a result, the user can distinctly specify which of the home screen page and the web page he/she intends to control.

A method of arranging the multiple web pages on the home screen page is described in detail below referring to the accompanying drawings. In particular, FIGS. 13A(a) to 13A(c), 13B(a) and 13B(b), 13C(a) and 13C(b), and 13D(a) to 13D(d) are diagrams, each illustrating the method of arranging the multiple web pages on the home screen page in the mobile terminal according to one embodiment of the present invention.

In the mobile terminal according to one embodiment of the present invention, if the web page to be arranged on the home screen page is set, as described above referring to FIG, 9 and FIGS. 10(a) to 10(d), the multiple web pages are set depending on the user selection. For example, the controller 180, as illustrated in FIG. 13A(a), is given the setting of the multiple web pages through multiple URL information input windows 1411 and 1412, based on the user selection.

The controller 180, as illustrated in FIG. 13A(b), arranges the web page corresponding to the URL information (for example, "www.search.com" and "www.aver.com") that is input to the multiple URL input windows, on one home screen page 1420. The method of arranging the multiple web pages on the home screen page is configured in various ways depending on the user selection.

As one example, the controller 180, as illustrated in FIG. 13A(b), arranges the multiple web pages 1421 and 1422 on the home screen page 1420, in the form of a tap. In this instance, one web page 1421 of the multiple web pages is given precedence over one different web page 1422 in being output to the home screen page 1420. Then, the predetermined-type touch input is applied in FIG. (A)(b) with respect to the home screen page (for example, if a specific part of the one different web page 1422 is selected by the user), the different web page 1400, as illustrated in FIG. 13A(c), is given precedence over the one web page 1421 in being output to the home screen page 1420.

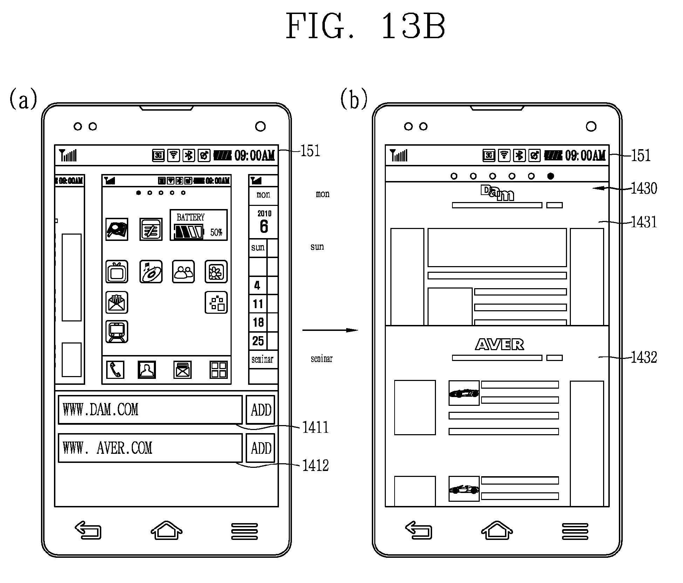

In addition, as one example, the controller 180, as illustrated in FIGs. 13B(a) and 13B(b), divides the home screen page 1430 into the multiple web pages 1431 and 1432, and one of the multiple web pages 1431 and 1432 is arranged on the home screen page 1430. In this instance, a size of a region that results from the division is possible to change depending on the user selection. If the size of the region that results from the division is changed, a display size of the web page arranged on each region is also changed.

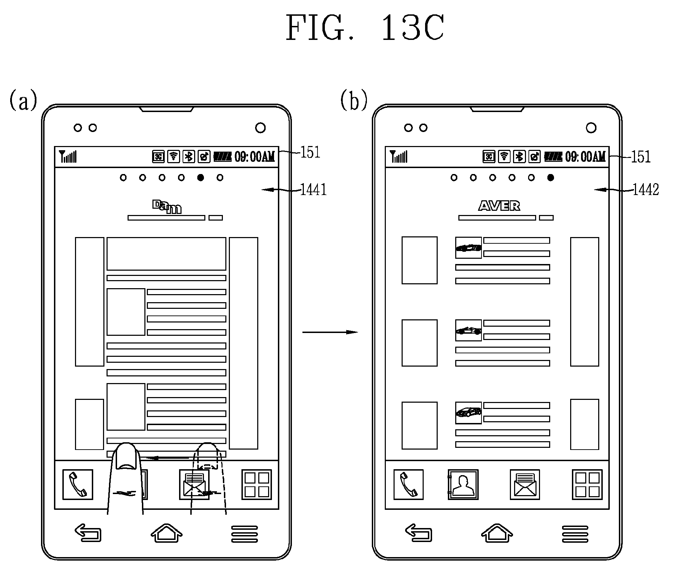

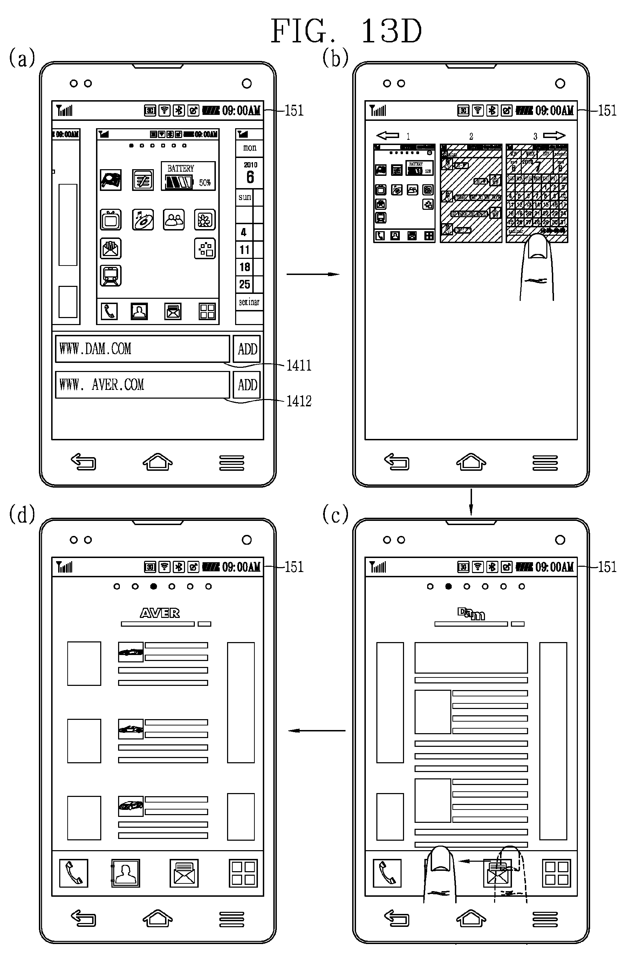

In addition, as one example, the controller 180, as illustrated in FIGS. 13C(a) and 13C(b), outputs the multiple web pages to the different home screen pages 1441 and 1442. In this instance, the controller 180, as illustrated in FIGS. 13D(a) and 13D(b), determines to which ones of the multiple home screen pages the multiple web pages are output, respectively, depending on the user selection. For example, if the second and third home screen pages, as illustrated in FIG. 13D(b), are selected by the user, the controller 180, as illustrated in FIGS. 13D(c) and 13D(d), arranges the multiple web pages on the second home screen page 1451 and the third home screen page 1452, respectively.

Further, if the web page different from the web page described above has to be generated in response to the touch input with respect to the web page arranged on the home screen page, the different web page is arranged similarly to the method described referring to FIGS. 13A(a) to 13A(c), and FIGS. 13B(a) and 13B(b), 13C(a) and 13C(b), and 13D(a) to 13D(d), or is output through the web browser, not the home screen page.

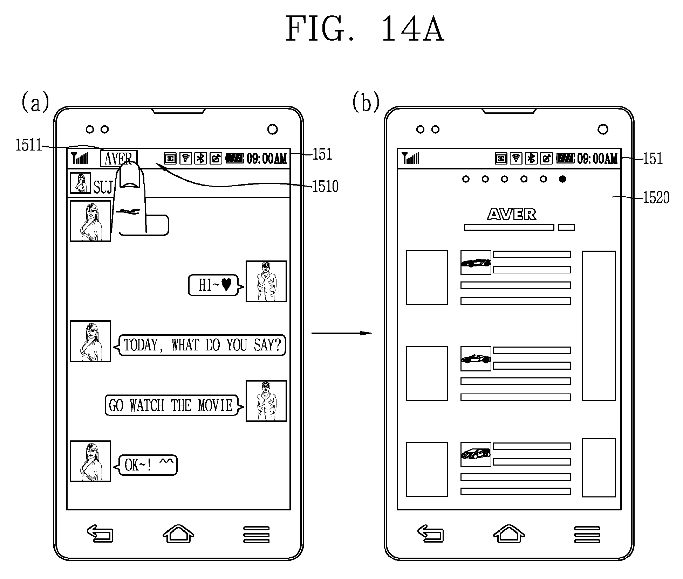

A method of displaying or outputting the web page arranged on the home screen page is described in detail below referring to the accompanying drawings. FIGS. 14A(a) and 14A(b) and 14B(a) to 14B(c) are diagrams, each illustrating a method of outputting the web page arranged on the home screen page in the mobile terminal according to one embodiment of the present invention.

In the mobile terminal according to one embodiment of the present invention, even though the home screen page is not currently output to the display unit 151, the user can be provided with a user interface through which direct access to the home screen page on which the web page is arranged is possible at any time.

As one example, the controller 180, as illustrated in FIG. 14A(a), outputs a graphic image (or an icon 1511) representing the web page arranged on the home screen page to at least one part of a status information display region 1510 indicating status information (for example, battery information, telecommunication status information, event information, and the like) on the mobile terminal. Then, if the graphic image 1511 is selected by the user, the controller 180, as illustrated in FIG. 14A(b), outputs a home screen page 1520 on which the web page is arranged, to the display unit 151.

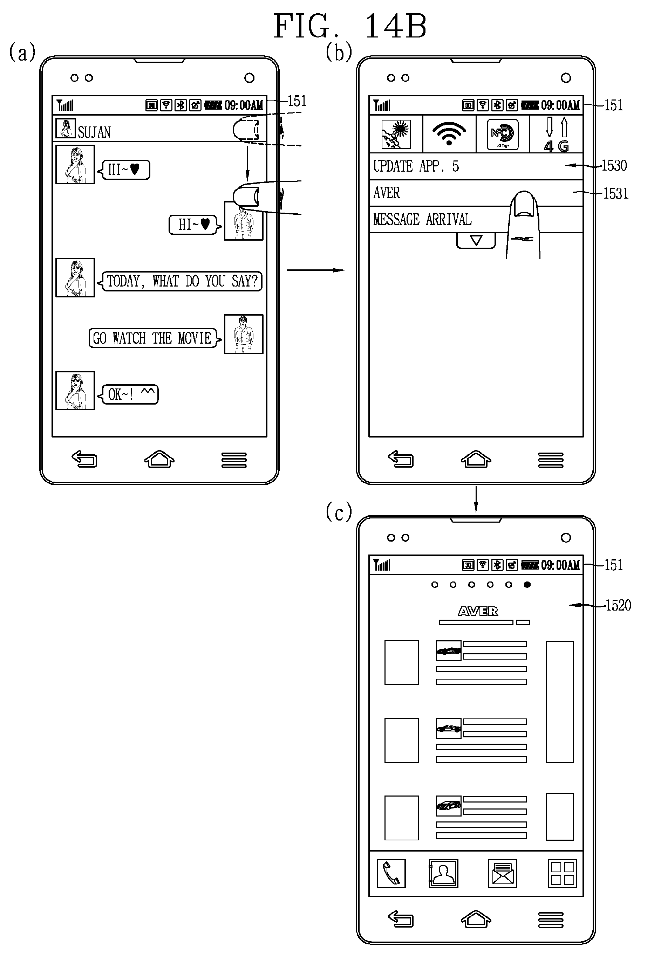

As another example, the controller 180, as illustrated in FIG. 14B(a) and 14B(b), outputs an alarm message window 1530 that is displayed depending on the user selection, to at least one region of the display unit 151. An alarm item 1531 that includes information corresponding to the web page arranged on the home screen page is displayed on the alarm message window 1530. Then, the controller 180, as illustrated in FIG. 14B(b) and 14B(c), controls the display unit 151 tso the home screen page 1520 on which the web page is arranged is output, in response to selection of the alarm item 1531.

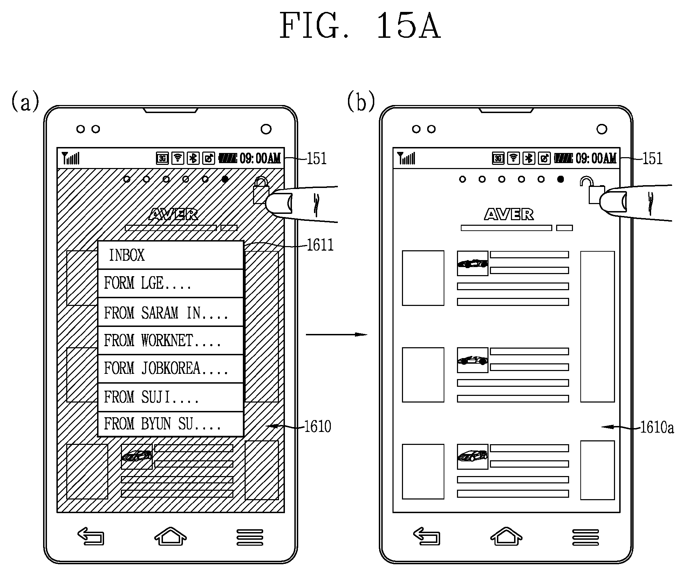

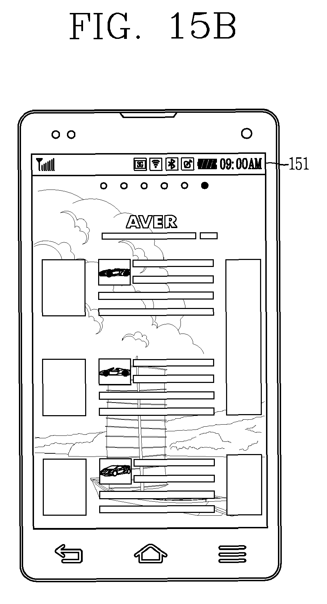

An attribute of the web page arranged on the home screen page is described in detail below referring to the accompanying drawings. In particular, FIGS. 15A(a) and 15A(b) and FIG. 15B are diagrams, each illustrating the attribute of the web page arranged on the home screen page in the mobile terminal according to one embodiment of the present invention.

In the mobile terminal according to one embodiment of the present invention, the web page arranged on the home screen page is treated as a background image, depending on the condition. For example, when the web page is arranged in the home screen page 1161, as illustrated in FIG. 15A(a), the controller 180 can also additionally arrange at least one 1611 of the icon and the widget of the application so it overlaps the web page.

Then, according to the control command input mode with respect to the web page, the controller 180 checks whether the control command with respect to the home screen page is for the web page or for at least one of the icon and the widget of the application and distinguish between these two kinds of control commands. For example, if the control command input mode is the unlocked mode, the controller 180 recognizes the touch input with respect to the display unit 151 as the control command with respect to the web page.

In addition, in the control command input mode with respect to the web page is the unlocked mode, as the controller 180, as illustrated in FIG. 15A(b), outputs only the web page, without outputting at least one of the icon and the widget of the application arranged on a home screen page 1610. Then, if the control command input mode with respect to the web page is the locked mode, the controller 180, as illustrated in FIG. 15A(a), outputs at least one of the icon and the widget of the application, along with the web page, in which case the web page is given color treatment so web page is displayed in gray, or is configured so web page is displayed transparently. This makes the web page easily distinguishable from the icon or the widget of the application.

On the other hand, if the web page, as illustrated in FIG. 15B, is arranged on the home screen page, the controller 180 makes the background image of the home screen page distinguishable to the user by rendering transparent the region of the web page, on which the information is not displayed.

As described above, in the mobile terminal according to one embodiment of the present invention and the method of controlling the mobile terminal, the home screen page is efficiently used by outputting at least one of the icon and the widget to the home screen page, along with the web page.

In addition, in the mobile terminal according to one embodiment of the present invention and the method of controlling the mobile terminal, the predetermined screen information, of which the layout is unchangeable, is output to the home screen page. As a result, the user can be more speedily provided with the predetermined information from the home screen page.

In addition, since the screen information in the home screen page is changed to the different information by the update event, automatically or based on the user's control command, the user can continue to be provided with the updated information from the home screen page.

In addition, the content included in the screen information is reproduced on the proper application or on the home screen page, and the control command with respect to the content is discriminated from the control command for switching the home screen page, according to the user's setting. As a result, the user can be easily provided with the information.

Furthermore, in the mobile terminal according to one embodiment of the present invention and the method of controlling the mobile terminal, the web page is output to the home screen page, and the information included in the web page is changed based on the user's selection.

Accordingly, even though the user does not execute the web browser separately, he/she can obtain the information through the web page from the home screen page.

In addition, according to one embodiment disclosed in the present specification, the method described above may be realized by being stored as processor-readable codes in a program-stored medium. A ROM, a RAM, a CD-ROM, a magnetic tape, a floppy disk, an optical data storage device and the like are examples of the processor-readable medium, and the processor-readable medium may be realized in the form of a carrier wave (for example, a transmission over the Internet).

With regard to the mobile terminal described above, the configuration and method of the embodiments described above are not given any limitation to their applications, and all of, or some of the embodiments may be selectively combined with each other in a manner that creates various modifications.

The foregoing embodiments and advantages are merely exemplary and are not to be considered as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100) comprising:
a wireless communication unit (110) configured to wirelessly communicate with at least one other terminal;
a touch screen display unit configured to display a home screen page among a plurality of home screen pages; and
a controller (180) configured to:
receive a touch input on the displayed home screen page,
limit or prevent a layout of the content on the displayed home screen page from being changed based on the received touch input and instead execute a function related to the received touch input, when the displayed home screen page includes a first attribute indicating the layout of the content on the home screen page is limited or prevented from being changed, and
change the layout of the content on the displayed home screen page based on the received touch input, when the displayed home screen page includes a second attribute indicating the layout of the content on the home screen page can be changed.

2. The mobile terminal according to claim 1, wherein the first attribute indicates the displayed home screen page includes a web browser home screen page including predetermined uniform resource locator (URL) information or an execution home screen page including information from an executing application, and
wherein the second attribute indicates the displayed home screen page includes an icon home screen page including icons or widgets that can be moved to change the layout of the icons or widgets on the icon home screen page.

3. The mobile terminal according to claim 2, wherein when the currently displayed home screen page is the web browser home screen page, the controller is further configured to automatically update or refresh content on the web browser home screen page, based on a received update event.

4. The mobile terminal according to claim 2, wherein the controller is further configured to update or refresh content on the web browser home screen page when the currently displayed home screen page is switched from the icon home screen page to the web browser home screen page.

5. The mobile terminal according to claim 2, wherein the received input includes a touch and drag on specific content included in the displayed home screen page, and when the displayed home screen page is the web browser home screen page, the received touch and drag plays or executes the touch and dragged content, and when the displayed home screen page is the icon home screen page, the received touch and drag moves the touch and dragged content to change the layout of the icon home screen page.

6. The mobile terminal according to claim 1, wherein the controller is further configured to link a web browser page to one of the plurality of home screen pages based on a user input, and to assign the first attribute to the web browser page.

7. The mobile terminal according to claim 6, wherein the controller is further configured to display an input window on the display unit for linking the web browser page to one of the plurality of home screen pages, and to link the web browser page to said one of the plurality of home screen pages based on uniform resource locator (URL) information input into the input window.

8. The mobile terminal according to claim 7, wherein the controller is further configured to display at least part of the web browser page with a reduced icon home screen page and the input window when the URL information is input into the input window.

9. The mobile terminal according to claim 7, wherein the controller is further configured to display the input window based on a received touching of an icon displayed on the icon home screen page or based on a predetermined touch and drag on the icon home screen page.

10. The mobile terminal according to claim 2, wherein the controller is further configured to assign a locked mode or an unlocked mode to the web browser home screen, and to scroll the displayed web browser home screen page to another home screen page based on a touch and drag when the web browser home screen page is assigned the locked mode and to scroll contents on the web browser home screen page when the web browser home screen page is assigned the unlocked mode.

11. The mobile terminal according to claim 2, wherein the controller is further configured to display an alarm message about the web browser home screen page when the icon home screen page or execution home screen page is currently displayed.

12. The mobile terminal according to claim 11,
wherein the controller is further configured to switch to the web browser home screen page or execution home screen page, when an input is received in response to the alarm message.

13. The mobile terminal according to claim 1, wherein the plurality of home screen pages include at least first, second and third home screen pages, and
wherein the controller is further configured to switch between the first and second home screen pages based on a first touch and drag in a first direction, and to switch between the first and third home screen pages based on a second touch and drag in a second direction perpendicular to the first direction.

14. A method of controlling a mobile terminal, the method comprising:
displaying, via a touch screen display unit, a home screen page among a plurality of home screen pages;
receiving, via a controller, a touch input on the displayed home screen page;
limiting or preventing, via the controller, a layout of the content on the displayed home screen page from being changed based on the received touch input and instead executing a function related to the received touch input, when the displayed home screen page includes a first attribute indicating the layout of the content on the home screen page is limited or prevented from being changed; and
changing the layout of the content on the displayed home screen page based on the received touch input, when the displayed home screen page includes a second attribute indicating the layout of the content on the home screen page can be changed.

15. The method according to claim 14, further comprising:
updating or refreshing content on the web browser home screen page when the currently displayed home screen page is switched from the icon home screen page to the web browser home screen page.
